# EUROPÄISCHE PATENTSCHRIFT

(11) **EP 3 908 458 B1**
(45) Veröffentlichungstag und Bekanntmachung des Hinweises auf die Patenterteilung: **04.09.2024**
(21) Anmeldenummer: 19818073.9
(22) Anmeldetag: 12.12.2019
(51) Int. Cl.: B32B 17/10, B32B 3/26, B32B 27/08

(54) **VORGEFERTIGTES ELEKTRISCH STEUERBARES FUNKTIONSELEMENT MIT SCHUTZFOLIEN**
PREFABRICATED ELECTRICALLY CONTROLLABLE FUNCTIONAL ELEMENT WITH PROTECTIVE FILMS
ÉLÉMENT FONCTIONNEL ÉLECTROCOMMANDABLE PRÉFABRIQUÉ POURVU DE FEUILLES DE PROTECTION

(30) Priorität: 07.01.2019 EP 19150484
(43) Veröffentlichungstag der Anmeldung: 17.11.2021
(73) Patentinhaber: Saint-Gobain Glass France, 92400 Courbevoie (FR)
(72) Erfinder: ZHANG, Huixing, 52064 Aachen (DE); MANZ, Florian, 52064 Aachen (DE)
(74) Vertreter: Gebauer, Dieter Edmund
(86) Internationale Anmeldenummer: PCT/EP2019/084787
(87) Internationale Veröffentlichungsnummer: WO 2020/143984

(56) Entgegenhaltungen:
- WO-A1-2014/023475
- WO-A1-2017/157626
- WO-A1-2018/082920
- WO-A1-2018/188844
- US-A1- 2009 176 101
- US-A1- 2012 307 337

## Beschreibung

Die Erfindung betrifft ein vorgefertigtes Funktionselement mit elektrisch steuerbaren optischen Eigenschaften, ein Verfahren zur Herstellung einer Verbundscheibe mit elektrisch steuerbaren optischen Eigenschaften, in die das Funktionselement eingebaut wird, sowie die Verwendung des Funktionselements.

Verbundscheiben mit elektrisch steuerbaren Funktionselementen sind als solche bekannt. Die optischen Eigenschaften der Funktionselemente können durch eine angelegte elektrische Spannung verändert werden.

Ein Beispiel für solche Funktionselemente sind SPD-Funktionselemente (SPD = suspended particle device), die beispielsweise aus EP 0876608 B1 und WO 2011033313 A1 bekannt sind. Durch die angelegte Spannung lässt sich die Transmission von sichtbarem Licht durch SPD-Funktionselemente steuern.

Ein weiteres Beispiel sind PDLC-Funktionselemente (PDLC = polymer dispersed liquid crystal), die beispielsweise aus DE 102008026339 A1 bekannt sind. Die aktive Schicht enthält dabei Flüssigkristalle, welche in eine Polymermatrix eingelagert sind. Wird keine Spannung angelegt, so sind die Flüssigkristalle ungeordnet ausgerichtet, was zu einer starken Streuung des durch die aktive Schicht tretenden Lichts führt. Wird an die Flächenelektroden eine Spannung angelegt, so richten sich die Flüssigkristalle in einer gemeinsamen Richtung aus und die Transmission von Licht durch die aktive Schicht wird erhöht.

Ein weiteres Beispiel sind PNLC-Funktionselemente (PNLC = polymer network liquid crystal). Die aktive Schicht enthält dabei Flüssigkristalle, welche in ein Polymernetzwerk eingelagert sind, wobei die Funktionsweise ansonsten analog wie bei den PDLC-Funktionselementen ist.

SPD-, PDLC und PNLC-Funktionselemente sind als Mehrschichtfolie kommerziell erhältlich, wobei die aktive Schicht und die zum Anlegen einer Spannung erforderlichen Flächenelektroden zwischen zwei Trägerfolien, typischerweise aus PET, angeordnet sind. Bei der Herstellung der Verbundscheibe wird das Funktionselement in der gewünschten Größe und Form aus der Mehrschichtfolie ausgeschnitten und zwischen die Folien einer Zwischenschicht eingelegt, mittels derer zwei Glasscheiben miteinander zur Verbundscheibe laminiert werden. Die Seitenkante des Funktionselements ist dabei offen, so dass die aktive Schicht über die Seitenkante Kontakt zu anderem Material der Verbundscheibe hat, z.B. aus der Zwischenschicht, was zu funktionellen oder optischen Störungen führen kann.

Für die Zwischenschicht wird z.B. häufig Polyvinylbutyral (PVB) verwendet, welches Weichmacher enthält. Der Weichmacher oder andere chemische Bestandteile der Zwischenschicht können über die offene Kante des Funktionselements in die aktive Schicht eindiffundieren, was zur Korrosion oder Degradation der aktiven Schicht führen kann. Dies äußert sich insbesondere als Ent- oder Verfärbung der aktiven Schicht im Randbereich, was die Funktion und das optische Erscheinungsbild des Funktionselements negativ beeinflussen kann. Bei PDLC für Gebäude verwendet man für die Zwischenschicht auch gerne Ethylenvinylacetat (EVA), bei dem die Defekte weniger ausgeprägt sind.

In WO 2012154663 A1 und WO 2014023475 A1 wird vorgeschlagen, die Kante des Funktionselements mit einem polymeren Band, vorzugsweise aus Polyimid, zu versiegeln, um die Beeinträchtigung der aktiven Schicht zu vermeiden. Ist die betreffende Seitenkante des Funktionselements in Durchsicht durch die Verbundscheibe allerdings sichtbar, so hat diese Lösung den Nachteil, dass das Band eventuell optisch wahrnehmbar ist, was ebenfalls ästhetisch wenig ansprechend ist. Außerdem erfordert dies zusätzliche Arbeitsschritte. Diesen Dokumenten können jeweils Funktionselemente entnommen werden, die im verbauten Zustand auf beiden Seiten eine Klebefolie aufweisen. Im unverbauten Zustand weisen die Funktionselemente keine Klebefolien auf.

WO 2018/188844 A1 und US 2012/307337 A1 offenbaren weitere Funktionselemente, die in einer Verbundscheibe in Thermoplasten eingebettet sind.

Als Mehrschichtfolie kommerziell erhältliche Funktionselemente wie aktuelle PDLC-Folien werden beidseitig mit einer Schutzfolie aus Polypropylen oder Polyethylen abgedeckt. Die Schutzfolie dient insbesondere dazu, die Trägerfolie vor Verschmutzungen oder Verkratzungen zu schützen. Während des Laminiervorgangs zur Bildung einer Verbundscheibe muss die Schutzfolie vor dem Laminieren entfernt werden. Während der Laminierung wird die Schutzfolie manchmal aber versehentlich nicht entfernt, was die Eigenschaften der Verglasung beeinflusst. Hauptsächlich werden die Haftung und Dicke beeinflusst, aber auch die optischen Eigenschaften (Transmission und Reflexion) können leicht verändert werden.

Bei der richtigen Handhabung muss die Schutzfolie von dem Funktionselement entfernt werden und das von der Schutzfolie befreite Funktionselement muss dann zusammen mit Verbindungsfolien in eine Anordnung mit den Scheiben gebracht werden. Die vielen Arbeitsschritte sind arbeitsaufwändig und dadurch besteht eine erhöhte Gefahr der Verschmutzung des Funktionselements. Die anschließende Reinigung des Funktionselements kann zu zusätzlichen Defekten führen. Wenn die Defekte nicht erkannt werden, kann eine solche Verunreinigung im transparenten Bereich der fertig laminierten Scheibe wiedergefunden werden und sorgt infolgedessen zu erhöhtem Ausschuss. Gegebenenfalls sind auch zusätzliche Arbeitsschritte für eine Versiegelung der Seitenkante des Funktionselements erforderlich.

Der vorliegenden Erfindung liegt die Aufgabe zugrunde, ein Funktionselement mit elektrisch steuerbaren optischen Eigenschaften bereitzustellen, das die vorstehend beschriebenen Nachteile aus dem Stand der Technik überwindet. Insbesondere besteht die Aufgabe der Erfindung darin, ein Funktionselement mit elektrisch steuerbaren optischen Eigenschaften bereitzustellen, bei dem zusätzliche Arbeitsschritte, die für die Entfernung der Schutzfolien erforderlich sind, eingespart werden und ein effizientes Herstellungsverfahren für Verbundscheiben, die ein solches Funktionselement mit elektrisch steuerbaren optischen Eigenschaften enthalten, bereitgestellt werden kann. Außerdem soll auch eine gegebenenfalls gewünschte oder erforderliche Versiegelung der Seitenkante des Funktionselements in vereinfachter Weise möglich sein.

Die Erfinder haben festgestellt, dass diese Aufgabe durch Ersatz der bisher üblichen Schutzfolien für Funktionselemente durch Schutzfolien aus einem bestimmten thermoplastischen Material gelöst werden kann, die direkt in die Verbundscheiben einlaminiert werden können.

Die Aufgabe der vorliegenden Erfindung wird daher durch ein Funktionselement gemäß dem unabhängigen Anspruch 1 gelöst. Die Erfindung betrifft auch ein Verfahren zur Herstellung eine Verbundscheibe mit elektrisch steuerbaren optischen Eigenschaften mit dem eingebauten Funktionselement, sowie die Verwendung des Funktionselements gemäß den weiteren nebengeordneten Ansprüchen. Bevorzugte Ausführungen gehen aus den Unteransprüchen hervor.

Es ergeben sich z.B. folgende Vorteile bei dem erfindungsgemäßen Funktionselement, bei dem die üblichen Schutzfolien, z.B. aus PE oder PP, ersetzt werden:
- Die Schutzfolie kann direkt in eine Verscheibung einlaminiert werden, wodurch Zeit bei der Laminierung eingespart werden kann. Eine vorherige Ablösung der Schutzfolie ist nicht erforderlich. Die Schutzfolie kann gleichzeitig als Verbindungsfolie bzw. Laminierfolie dienen.
- Der Laminierungsprozess wird vereinfacht. Es sind weniger Bearbeitungsschritte mit dem Funktionselement erforderlich, so dass unbeabsichtigte Einschlüsse vermieden können, insbesondere in den sichtbaren Bereichen, und die Prozesszeit wird verkürzt. Insgesamt verbessert sich bei der Herstellung von Verbundscheiben mit einem Funktionselement das Ergebnis und die Effizienz.
- Das Funktionselement wird von der erfindungsgemäß verwendeten Schutzfolie geschützt. Mögliche Kratzer auf der Oberfläche der Schutzfolie verschwinden während der Laminierung. Die erfindungsgemäß eingesetzte Schutzfolie ist um ein Mehrfaches dicker als die herkömmlich eingesetzten Folien, wodurch auch tiefere Kratzer ausgeglichen werden können. Durch punktuellen Druck wird üblicherweise das Risiko von "Beulen" erhöht. Diese sind hinterher durch leicht unterschiedliche optische Eigenschaften im Endprodukt zu finden. Auch dieses Problem wird durch die vorliegende Erfindung gemindert.
- Die Erfinder haben außerdem festgestellt, dass Folien, die für die Versiegelung der Seitenkante des Funktionselements geeignet sind, unmittelbar zwischen der Schutzfolie und der Trägerfolie in einfacher Weise fixiert werden können. Dies reduziert die Arbeit für den Zusammenbau, wenn eine solche Versiegelung eingebaut werden soll. Es sind auch keine Kleber oder Klebstoffschichten zur Fixierung der Versiegelung erforderlich.

Die Erfindung wird im Folgenden näher erläutert. Die Erfindung betrifft insbesondere das Funktionselement in nicht eingebautem bzw. unverbautem Zustand, d.h. das Funktionselement als solches, die Verwendung des Funktionselements, sowie ein Verfahren zum Einbau des Funktionselements in eine Verbundscheibe. Die Erfindung betrifft somit ein unverbautes (vorgefertigtes bzw. konfektioniertes) Funktionselement, welches noch nicht in einer Verbundscheibe verbaut ist und im unverbauten Zustand bereits zwei Schutzfolien aufweist, die im vorgefertigten Funktionselement als Schutzfolien dienen und beim Laminieren der Verbundscheibe als Laminationsschichten (Laminationsfolien) dienen. Das vorgefertigte Funktionselement kann somit in eine Verbundscheibe einlaminiert werden, ohne dass weitere Laminationsfolien zum Laminieren der Verbundenscheibe erforderlich sind.

Gemäß der Erfindung wird ein Funktionselement mit elektrisch steuerbaren optischen Eigenschaften bereitgestellt, das eine Mehrschichtfolie umfasst, die in dieser Reihenfolge eine erste Schutzfolie, eine erste Trägerfolie, eine erste Flächenelektrode, eine aktive Schicht, eine zweite Flächenelektrode, eine zweite Trägerfolie und eine zweite Schutzfolie umfasst, wobei die erste Schutzfolie und die zweite Schutzfolie jeweils unabhängig ausgewählt sind aus einer Polyvinylbutyral (PVB)-Folie, einer Ethylenvinylacetat (EVA)-Folie oder einer thermoplastischen Polyurethan (TPU)-Folie.

Das Funktionselement umfasst eine Mehrschichtfolie. Das Funktionselement kann gegebenenfalls nur aus dieser Mehrschichtfolie bestehen. Die Mehrschichtfolie wird insbesondere aus mehreren miteinander verbundenen Schichten bzw. Folien gebildet.

Die Mehrschichtfolie umfasst eine aktive Schicht. Aktive Schichten sind dem Fachmann bekannt. Die aktive Schicht weist veränderliche optische Eigenschaften auf, die durch eine an die aktive Schicht angelegte elektrische Spannung gesteuert werden können. Unter elektrisch steuerbaren optischen Eigenschaften werden im Sinne der Erfindung insbesondere solche Eigenschaften verstanden, die stufenlos steuerbar sind, aber gleichermaßen auch solche, die zwischen zwei oder mehr diskreten Zuständen geschaltet werden können. Die besagten optischen Eigenschaften betreffen insbesondere die Lichttransmission und/oder das Streuverhalten.

Die Mehrschichtfolie umfasst außerdem Flächenelektroden zum Anlegen der Spannung an die aktive Schicht, die zwischen den Trägerfolien und der aktiven Schicht angeordnet sind. Eine erste Flächenelektrode ist zwischen der aktiven Schicht und der ersten Trägerfolie angeordnet und eine zweite Flächenelektrode ist zwischen der aktiven Schicht und der zweiten Trägerfolie angeordnet. Die Flächenelektroden können bzgl. Zusammensetzung und/oder Dicke gleich oder verschieden sein. Die Flächenelektroden sind meist gleich.

Die Flächenelektroden sind bevorzugt als transparente, elektrisch leitfähige Schichten ausgestaltet. Die Flächenelektroden enthalten bevorzugt zumindest ein Metall, eine Metallegierung oder ein transparentes leitfähiges Oxid (transparent conducting oxide, TCO). Beispiele für transparente, leitende Oxide (TCO) sind mit Zinn dotiertes Indiumoxid (ITO, auch als Indium-Zinn-Oxid bezeichnet), mit Antimon oder Fluor dotiertes Zinnoxid (SnO₂:Sb, SnO₂:F), mit Gallium dotiertes Zinkoxid (ZnO:Ga) oder mit Aluminium dotiertes Zinkoxid (ZnO:AI), wobei ITO bevorzugt ist.

Die Dicke der elektrisch leitenden Schichten auf Basis dieser transparenten leitenden Oxide (TCO) liegt bevorzugt im Bereich von 10 nm bis 2 µm, stärker bevorzugt im Bereich von 30 nm bis 500 nm und insbesondere im Bereich von 50 bis 100 nm.

Die elektrisch leitfähige Schicht kann auch eine Metallschicht sein, vorzugsweise eine Dünnschicht oder ein Stapel von Dünnschichten, die Metallschichten umfassen. Metall umfasst hier auch Metalllegierungen. Geeignete Metalle sind z.B. Ag, Al, Pd, Cu, Pd, Pt, In, Mo, Au, Ni, Cr, W oder Legierungen davon. Diese Metallbeschichtungen werden als TCC (transparent conductive coating) bezeichnet. Typische Dicken der Einzelschichten liegen im Bereich von 2 bis 50 nm.

Typischerweise sind die Flächenelektroden in Form einer elektrisch leitfähigen Beschichtung auf der Trägerfolie ausgebildet. Die Seite der Trägerfolie mit der die Flächenelektrode bildenden elektrisch leitfähigen Beschichtung ist dann in der Mehrschichtfolie der aktiven Schicht zugewandt.

Die Mehrschichtfolie umfasst ferner eine erste Trägerfolie, die zwischen der ersten Schutzfolie und der zur ersten Trägerfolie nächsten Flächenelektrode angeordnet ist, und eine zweite Trägerfolie, die zwischen der zweiten Schutzfolie und der zur zweiten Trägerfolie nächsten Flächenelektrode angeordnet ist.

Bei der ersten und zweiten Trägerfolie handelt es sich insbesondere um thermoplastische Folien. Die erste und zweite Trägerfolie können bzgl. Zusammensetzung und/oder Dicke gleich oder verschieden sein. Typischerweise bestehen die beiden Trägerfolien aus derselben Zusammensetzung. Die folgenden Angaben zu Trägerfolien beziehen sich sowohl auf die erste Trägerfolie als auch auf die zweite Trägerfolie.

Die Trägerfolien enthalten ein thermoplastisches Material oder bestehen daraus. Das thermoplastische Material kann ein thermoplastisches Polymer oder eine Mischung von zwei oder mehr thermoplastischen Polymeren sein. Neben dem thermoplastischen Material kann die Trägerfolie ferner Zusätze enthalten, wie z.B. Weichmacher. Das thermoplastische Material der Trägerfolien ist bevorzugt Polyethylenterephthalat (PET), wie es bei kommerziell erhältlichen Funktionselementen üblich ist.

Das thermoplastische Material der Trägerfolie kann auch Mischungen von PET mit anderen thermoplastischen Polymeren und/oder Copolymere von PET enthalten oder daraus bestehen. Das thermoplastische Material der Trägerfolie kann z.B. auch PU, Polypropylen, Polycarbonat, Polymethylmethacrylat, Polyacrylat, Polyvinylchlorid, Polyacetatharz, fluorinierte Ethylen-Propylene, Polyvinylfluorid und/oder Ethylen-Tetrafluorethylen enthalten oder daraus bestehen.

Die erste Trägerfolie und die zweite Trägerfolie sind bevorzugt jeweils unabhängig ausgewählt aus einer Polyethylenterephthalat (PET)-Folie. Neben dem thermoplastischen Polymer PET kann die PET-Folie ferner gegebenenfalls Additive enthalten, wie z.B. Weichmacher und/oder farbgebende Mittel, oder gegebenenfalls ein oder mehrere zusätzliche thermoplastische Polymere, wie z.B. die vorstehend beschriebenen. Ein oder mehrere farbgebende Mittel sind besonders vorteilhaft, weil dann das gestreute Licht schnell absorbiert wird. Dies verbessert die optischen Eigenschaften (reduzierter Regenbogeneffekt). Zusätzliche thermoplastische Polymere sind in der Regel nicht bevorzugt. Sofern aber ein oder mehrere zusätzliche thermoplastische Polymere enthalten sind, ist ihr Gesamtanteil geringer als von dem hauptsächlichen thermoplastischen Polymer PET, z.B. weniger als 20 Gew.-%, bevorzugt weniger als 10 Gew.-%, bezogen auf das gesamte thermoplastische Material in der PET-Folie.

Die Dicke jeder Trägerfolie liegt bevorzugt im Bereich von 0,03 mm bis 0,4 mm, stärker bevorzugt im Bereich von 0,04 mm bis 0,2 mm.

Die Mehrschichtfolie umfasst ferner eine erste Schutzfolie, die über der ersten Trägerfolie angeordnet ist, d.h. auf der Seite der ersten Trägerfolie, die von der aktiven Schicht weg weist, und eine zweite Schutzfolie, die über der zweiten Trägerfolie angeordnet ist, d.h. auf der Seite der zweiten Trägerfolie, die von der aktiven Schicht weg weist.

Die erste Schutzfolie und die zweite Schutzfolie bilden bevorzugt die beiden äußeren Oberflächen der Mehrschichtfolie aus. Das Funktionselement, insbesondere die Trägerfolien, sind durch die Schutzfolien vorteilhaft vor Beschädigung, wie Verkratzen, geschützt.

Die erste Schutzfolie und die zweite Schutzfolie sind jeweils unabhängig ausgewählt aus einer Polyvinylbutyral (PVB)-Folie, einer Ethylenvinylacetat (EVA)-Folie oder einer thermoplastischen Polyurethan (TPU)-Folie. Die erste und zweite Schutzfolie können bzgl. Zusammensetzung und/oder Dicke gleich oder verschieden sein. Die folgenden Angaben zu Schutzfolien beziehen sich sowohl auf die erste Schutzfolie als auch auf die zweite Schutzfolie.

Die Schutzfolien dienen nicht nur zum Schutz des Funktionselements, sondern auch zur Verklebung bzw. Laminierung der Komponenten der Verbundscheibe bei der Herstellung von Verbundscheiben, um die beiden Scheiben zu verbinden. Die Schutzfolien besitzen somit eine Doppelfunktion. Sie schützen einerseits das Funktionselement im nicht eingebauten Zustand und bei der Herstellung einer Verbundscheibe bilden sie andererseits eine Verbindungsschicht für die Verbindung der Komponenten der Verbundscheibe.

Bei der ersten und zweiten Schutzfolie handelt es sich insbesondere um thermoplastische Folien. Die aus einer Polyvinylbutyral (PVB)-Folie, einer Ethylenvinylacetat (EVA)-Folie oder einer thermoplastischen Polyurethan (TPU)-Folie ausgewählten Schutzfolien enthalten als thermoplastisches Polymer PVB, EVA bzw. TPU oder bestehen daraus. Neben dem thermoplastischen Polymer kann die Schutzfolie ferner gegebenenfalls Additive enthalten, wie z.B. Weichmacher, UV-Absorber, IR-Absorber oder gegebenfalls ein oder mehrere zusätzliche thermoplastische Polymere. Zusätzliche thermoplastische Polymere sind in der Regel nicht bevorzugt. Sofern aber ein oder mehrere zusätzliche thermoplastische Polymere enthalten sind, ist ihr Gesamtanteil geringer als von dem hauptsächlichen thermoplastischen Polymer (PVB, EVA oder TPU), z.B. weniger als 20 Gew.-%, bevorzugt weniger als 10 Gew.-%, bezogen auf das gesamte thermoplastische Material in der Schutzfolie.

Polyvinylbutyral (PVB)-Folien, Ethylenvinylacetat (EVA)-Folien und thermoplastische Polyurethan (TPU)-Folien werden u.a. als Verbindungsfolien bzw. Laminierfolien genutzt und sind in einer großen Vielfalt an Varianten im Handel erhältlich.

Die erste Schutzfolie und/oder die zweite Schutzfolie sind bevorzugt eine PVB-Folie, bevorzugt sind beide Schutzfolien PVB-Folien. Die Schutzfolien, insbesondere die PVB-Folien, können einen Weichmacher enthalten oder frei von Weichmacher sein. Da die Schutzfolien besonders bevorzugt dünn eingesetzt werden, sind auch weichmacherfreie Schutzfolien vergleichbar flexibel für die Verarbeitung wie dicke, Weichmacher enthaltende Folien. Die Schutzfolien, insbesondere die PVB-Folien, sind bevorzugt frei von Weichmacher. Geeignete weichmacherfreie PVB-Folien sind z.B. Movital^{®}-Folien, erhältlich von Kuraray. Weichmacherfreie Folien sind in der Regel preisgünstiger als Weichmacher enthaltende Folien. Ein weiterer Vorteil ist, dass keine Weichmacher ausdiffundieren können, was die Qualität der Verbundscheibe beeinträchtigen kann, insbesondere wenn die Seitenkante des Funktionselements nicht versiegelt ist.

Die erste Schutzfolie und die zweite Schutzfolie weisen bevorzugt jeweils unabhängig eine Dicke im Bereich von 0,03 mm bis 0,9 mm, besonders bevorzugt 0,3 mm bis 0,6 mm, auf, wobei es sich bevorzugt um PVB-Folien handelt. Geeignet sind z.B. gebräuchliche PVB-Folien mit einer Dicke von 0,38 mm. Sogenannte Akustikfolien haben z.B. eine Dicke von 0,52 mm oder 0,82 mm. Insofern weisen die erste Schutzfolie und die zweite Schutzfolie noch stärker bevorzugt jeweils unabhängig eine Dicke im Bereich von 0,3 mm bis 0,5 mm oder, sofern es sich um eine Akustikfolie handelt, im Bereich von 0,5 bis 0,9 mm auf.

Da die Schutzfolien des erfindungsgemäßen Funktionselements bei Einbau in einer Verbundscheibe verbleiben, können sie auch optische oder andere Funktionen in der Verbundscheibe übernehmen. Dies ist bei Einsatz von üblichen Verbindungsfolien bekannt. Die erste Schutzfolie und die zweite Schutzfolie können jeweils unabhängig ausgewählt werden aus einer klaren Folie, einer getönten Folie und einer Akustikfolie, wobei die erste und zweite Schutzfolie bevorzugt eine PVB-Folie sind. Akustikfolien sind z.B. aus mehreren, z.B. drei, PVB-Folien aufgebaut, wobei in der Mitte eine weichere PVB-Folie enthalten ist. Als Schutzfolien können z.B. zwei getönte PVB-Folien oder eine getönte PVB-Folie und eine klare PVB-Folie eingesetzt werden, um bestimmte optische Effekte zu erreichen.

In einer bevorzugten Ausführungsform sind die nach außen weisenden Seiten der Schutzfolien aufgeraut, um das Entlüften beim Laminieren zu vereinfachen. Dies ist insbesondere bei Einsatz von PVB-Folien als Verbindungsfolien vorteilhaft.

In einer bevorzugten Ausgestaltung ist das Funktionselement ein PDLC-Funktionselement, ein PNLC-Funktionselement oder ein SPD-Funktionselement. Die Funktionsweise von Funktionselementen sind dem Fachmann an sich bekannt.

Die aktive Schicht eines PDLC-Funktionselements enthält Flüssigkristalle, welche in eine Polymermatrix eingelagert sind. Wird an die Flächenelektroden keine Spannung angelegt, so sind die Flüssigkristalle ungeordnet ausgerichtet, was zu einer starken Streuung des durch die aktive Schicht tretenden Lichts führt. Wird an die Flächenelektroden eine Spannung angelegt, so richten sich die Flüssigkristalle in einer gemeinsamen Richtung aus und die Transmission von Licht durch die aktive Schicht wird erhöht.

Die aktive Schicht eines PNLC-Funktionselements enthält Flüssigkristalle, welche in ein Polymernetzwerk eingelagert sind. Ansonsten ist das Funktionsprinzip ähnlich wie bei dem PDLC-Funktionselement.

Die aktive Schicht eines SPD-Funktionselements enthält suspendierte Partikel, wobei die Absorption von Licht durch die aktive Schicht mittels Anlegen einer Spannung an die Flächenelektroden veränderbar ist. Durch das Anlegen der Spannung kann beispielsweise aus einer dunkelblauen Scheibe eine transparente Scheibe werden.

Das Funktionselement kann als eine laminierte Mehrschichtfolie bereitgestellt werden, die vorteilhaft in eine Verbundscheibe eingebaut werden kann. Das Funktionselement kann als Rollenware vorliegen, z.B. mit einer Breite von 0,8 m bis 2 m und einer Länge von bis zu 200 m oder mehr. Aus der Rollenware können dann nach Bedarf Stücke passender Größe ausgeschnitten werden. Die Fläche des passend geschnittenen erfindungsgemäßen Funktionselements kann breit variieren und so den Erfordernissen im Einzelfall angepasst werden. Die Fläche des Funktionselements beträgt z.B. von 100 cm² bis 20 m², wobei eine Fläche von 400 cm² bis 6 m² bevorzugt ist, wie sie für die Herstellung von Verglasungen von Fahrzeugen und von Bau- und Architekturverglasungen üblich sind. Die Dicke des Funktionselements ohne die beiden Schutzfolien beträgt z.B. von 0,09 mm bis 0,8 mm, z.B. 0,11 bis 0,41 mm. Ein Funktionselement mit geeigneter Größe und Form kann aus einem größeren Funktionselement ausgeschnitten werden.

Wie bereits erwähnt, kann es zweckmäßig oder erforderlich sein, die Seitenkante des in eine Verbundscheibe eingebauten Funktionselements teilweise oder ganz zu versiegeln. So kann z.B. PVB mit der aktiven Schicht des Funktionselements während des Laminierprozesses (hohe Temperatur und Druck) reagieren.

Die Erfinder haben festgestellt, dass zusätzliche Versiegelungsfolien, die für die Randversiegelung des Funktionselements in der Verbundscheibe geeignet sind, direkt und in einfacher Weise an dem unverbauten Funktionselement fixiert werden können, indem man die Schutzfolie in einem Randbereich des Funktionselements von der Trägerfolie ablöst und zurückfaltet und nach Einlegen eines Teils der Versiegelungsfolie die zurückgefaltete Schutzfolie wieder auf den eingelegten Teil der Versiegelungsfolie auflegt. Auf diese Weise ist ein Teil der Versiegelungsfolie zwischen Schutzfolie und Trägerfolie positioniert, während der andere Teil aus der Mehrschichtfolie herausragt. Dadurch kann die Arbeit für den Zusammenbau für eine Versiegelung verringert werden.

Je nach Bedarf können eine oder mehrere Versiegelungsfolien in dieser Weise an der Mehrschichtfolie des unverbauten Funktionselements fixiert werden. Die eine oder mehreren Versiegelungsfolien sind ausgewählt aus PET-Folien oder Polyimid-Folien, wobei PET-Folien deutlich vorteilhafter sind. Polyimid-Folien sind nicht ganz so effektiv, aber dafür transparent gelb und somit optisch gut sichtbar. Während Polyimid die Diffusion vermindert, ist die Versiegelung bei PET im Wesentlichen vollständig, so dass damit Diffusionseffekte vermieden werden.

PET-Folien wurden bereits vorstehend als mögliche Folie für die Trägerfolie beschrieben. Es wird auf die diesbezügliche Beschreibung verwiesen. Polimid-Folien sind ebenfalls gängige, im Handel erhätliche Folien.

In einer bevorzugten Ausführungsform umfasst das unverbaute Funktionselement daher ferner eine oder mehrere Versiegelungsfolien, die jeweils unabhängig ausgewählt sind aus einer Polyethylenterephthalat (PET)-Folie oder einer Polyimid-Folie, wobei jede Versiegelungsfolie an der Mehrschichtfolie angebracht bzw. fixiert ist, indem ein Teil der Versiegelungsfolie entlang eines Randbereichs der Mehrschichtfolie zwischen der ersten Schutzfolie und der ersten Trägerfolie oder zwischen der zweiten Schutzfolie und der zweiten Trägerfolie angeordnet ist und der andere Teil der Versiegelungsfolie aus der Mehrschichtfolie herausragt.

Ein Vorteil der Erfindung besteht unter anderem darin, dass für die Anbringung der Versiegelungsfolien bzw für die später erfolgende Versiegelung in der Verbundscheibe keine Klebstoffe oder Klebstoffschichten zur Fixierung erforderlich sind. Die Versiegelungsfolie braucht z.B. keine Klebstoffschicht aufzuweisen.

Entlang eines Randbereichs der Mehrschichtfolie des unverbauten Funktionselements können ein oder zwei Versiegelungsfolien angebracht werden. Die Anbringung von zwei Versiegelungsfolien wird nachstehend beschrieben. Während eine Versiegelungsfolie für eine Versiegelung ausreichen kann, ist es bevorzugt, wenn zwei Versiegelungsfolien entlang eines Randbereichs der Mehrschichtfolie angebracht werden, wenn entlang des Randbereichs keine Sammelschiene positioniert ist. Wenn entlang des betreffenden Randbereichs eine Sammelschiene positioniert ist, ist dort eine Versiegelungsfolie in der Regel ausreichend, der Einsatz von zwei Versiegelungsfolien ist aber auch möglich.

In einer weiteren bevorzugten Ausführungsform sind daher an einer oder mehreren Seiten der Mehrschichtfolie des unverbauten Funktionselements jeweils zwei Versiegelungsfolien angebracht, indem entlang eines Randbereichs der jeweiligen Seite ein Teil der einen Versiegelungsfolie zwischen der ersten Schutzfolie und der ersten Trägerfolie angeordnet ist und der andere Teil der Versiegelungsfolie aus der Mehrschichtfolie herausragt und ein Teil der anderen Versiegelungsfolie zwischen der zweiten Schutzfolie und der zweiten Trägerfolie angeordnet ist und der andere Teil der Versiegelungsfolie aus der Mehrschichtfolie herausragt.

Die nachfolgende Beschreibung bezieht sich auf die Anbringung von einer oder zwei Versiegelungsfolien entlang eines Randbereichs der Mehrschichtfolie und die vorstehend beschriebenen Anbringungsmethoden, sofern nicht anders angegeben.

Im Allgemeinen werden beim Einbau eines Funktionselements in Verbundscheiben auch Sammelschienen angeordnet, über die der Kontakt zur elektrischen Stromversorgung und die Verteilung des elektrischen Stroms zum Funktionselement erfolgt. Zur Anbindung der Sammelschienen an das Funktionselement bedarf es einer bestimmten Konfiguration, die gewöhnlich durch entsprechende Bearbeitung der Mehrschichtfolie des Funktionselements erhalten wird. Die Sammelschienen werden auch als Sammelleiter bezeichnet und sind dem Fachmann bekannt.

Das Funktionselement umfasst vorzugsweise mindestens zwei Sammelschienen, die entlang eines ersten Randbereichs und eines zweiten Randbereichs der Mehrschichtfolie angeordnet bzw. eingebaut werden. Jede Flächenelektrode ist mit mindestens einer Sammelschiene elektrisch leitend verbunden.

Die mindestens zwei Sammelschienen sind dabei insbesondere in folgender Weise angeordnet. Entlang eines ersten Randbereichs der Mehrschichtfolie sind die erste Trägerfolie, die zwischen der ersten Trägerfolie und der aktiven Schicht befindliche erste Flächenelektrode und die aktive Schicht ausgespart, so dass die zwischen der zweiten Trägerfolie und der aktiven Schicht befindliche zweite Flächenelektrode, die zweite Trägerfolie und die zweite Schutzfolie überstehen, wobei auf der überstehenden Flächenelektrode eine Sammelschiene angeordnet ist. Ferner sind entlang eines zweiten Randbereichs der Mehrschichtfolie die zweite Trägerfolie, die zwischen der zweiten Trägerfolie und der aktiven Schicht befindliche zweite Flächenelektrode und die aktive Schicht ausgespart, so dass die erste Schutzfolie, die erste Trägerfolie, und die zwischen der ersten Trägerfolie und der aktiven Schicht befindliche Flächenelektrode überstehen, wobei auf der überstehenden Flächenelektrode eine weitere Sammelschiene angeordnet ist.

Die Sammelschiene ist elektrisch leitend und gewöhnlich länglich entlang der betreffenden Seite der Mehrschichtfolie angeordnet. Sie kann z.B. durch ein elektrisch leitendes Metallband oder eine elektrisch leitende Beschichtung, z.B. ein Silber enthaltender Druck, gebildet sein. Metall schließt hier Metalllegierungen ein. Ein Band aus Kupfer oder einer Kupferlegierung ist z.B. geeignet. Die als Metallband ausgebildete Sammelschiene wird gewöhnlich über eine elektrisch leitfähige Zwischenschicht, z.B. eine Silberschicht, mit der Flächenelektrode verbunden.

Die mindestens zwei Sammelschienen können beide an einer Seite oder jeweils an einer anderen Seite des Funktionselements angeordnet sein. In einer bevorzugten Ausführungsform ist eine Sammelschiene in einem Seitenbereich einer Seite des Funktionselements angeordnet und die andere Sammelschiene in dem Seitenbereich der gegenüberliegenden Seite des Funktionselements angeordnet. Die besagten Randbereiche (erster und zweiter Randbereich) sind also einander gegenüberliegend angeordnet. Dementsprechend ist es bevorzugt, dass an zwei Seiten, bevorzugt an gegenüberliegenden Seiten, des Funktionselements keine Sammelschienen angeordnet sind.

In einer bevorzugten Ausführungsform sind an jeder Seite der Mehrschichtfolie jeweils eine oder zwei Versiegelungsfolien angebracht, wobei es besonders bevorzugt ist, dass an der oder den Seiten der Mehrschichtfolie, wo keine Sammelschiene angeordnet ist, zwei Versiegelungsfolien angebracht sind und an der oder den Seiten der Mehrschichtfolie, wo eine Sammelschiene angeordnet ist, eine Versiegelungsfolien angebracht ist.

Wenn eine Versiegelungsfolie an einer Seite der Mehrschichtfolie angebracht ist, wo eine Sammelschiene angeordnet ist, wird die Versiegelungsfolie vorzugsweise zwischen der in dem Randbereich ausgesparten Trägerfolie und der dazugehörigen Schutzfolie angebracht, d.h., bezogen auf die aktive Schicht, auf der der Sammelschiene gegenüberliegenden Seite.

Die eine oder die mehreren Versiegelungsfolien, die aus PET-Folien und/oder Polyimid-Folien, bevorzugt PET-Folien, ausgewählt sind, weisen bevorzugt jeweils unabhängig eine Dicke im Bereich von 0,02 mm bis 0,2 mm auf, stärker bevorzugt im Bereich von 0,04 mm bis 0,15 mm. Eine typische Dicke der Versiegelungsfolien ist z.B. 0,05 mm.

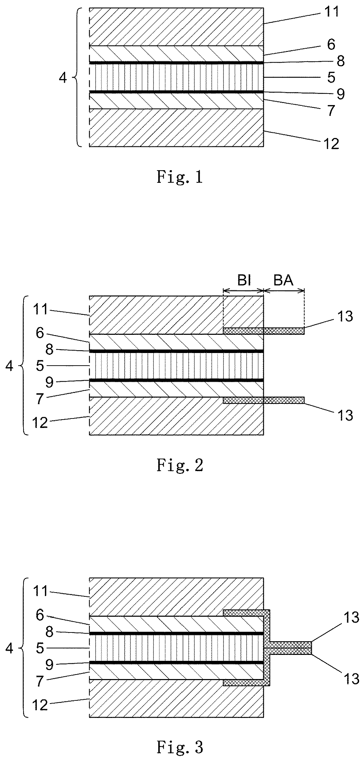

Die Länge der Versiegelungsfolie stellt die Dimension entlang der Seite der Mehrschichtfolie dar, an der die Versiegelungsfolie angebracht ist. Die Breite der Versiegelungsfolie ist entsprechend quer zur Länge bzw. quer zu der Seite der Versiegelungsfolie. Die Breite des Teils der Versiegelungsfolie, der zwischen Schutzfolie und Trägerfolie angeordnet ist, in Fig. 2 mit BI gekennzeichnet, die Breite des Teils der Versiegelungsfolie, der aus der Mehrschichtfolie herausragt, mit BA.

Die Länge der Versiegelungsfolie kann variieren. Die Länge der Versiegelungsfolie kann z.B. kleiner als die Länge der Seite der Mehrschichtfolie sein. Die Länge der Versiegelungsfolie ist bevorzugt gleich der oder größer als die Länge der Seite der Mehrschichtfolie, an der die Versiegelungsfolie angebracht ist, wobei sie bevorzugt länger ist, so dass sie an beiden Enden der Seite der Mehrschichtfolie überlappt. Die Versiegelungsfolie kann gegebenenfalls an einer oder mehreren Stellen Aussparungen aufweisen, z.B. um elektrische Leitungen durchführen zu können.

Die Breite des Teils der Versiegelungsfolie, der zwischen Schutzfolie und Trägerfolie angeordnet ist, soll eine ausreichende Fixierung der Versiegelungsfolie ermöglichen. Die Breite des Teils der Versiegelungsfolie, der aus der Mehrschichtfolie herausragt, soll ausreichen, um die nicht von den Schutzfolien gebildete Seitenkante des Funktionselements abdecken zu können. Sofern zwei Versiegelungsfolien an einem Randbereich bzw. einer Seite des Funktionselements angeordnet sind, gilt dies für die Summe der Breiten der Teile der beiden Versiegelungsfolien, die aus der Mehrschichtfolie herausragen. Für eine sichere Abdeckung ist ein Spielraum bei der Breite zu berücksichtigen, da die Versiegelungsfolien sich bei der Laminierung nicht unbedingt glatt an die Seitenkante anschmiegen, sondern sich Faltungen ergeben können.

Die Versiegelungsfolien sind z.B. jeweils so an der Mehrschichtfolie angebracht, dass der Teil der Versiegelungsfolie, der zwischen der Schutzfolie und der Trägerfolie angeordnet ist, eine Breite BI im Bereich von 3 bis 20 mm, bevorzugt 4 bis 15 mm, aufweist und/oder der Teil der Versiegelungsfolie, der aus der Mehrschichtfolie herausragt, eine Breite BA im Bereich von 5 bis 30 mm, bevorzugt 8 bis 20 mm, aufweist. Die Gesamtbreite der Versiegelungsfolie kann dementsprechend z.B. im Bereich von 8 bis 50 mm, bevorzugt 12 bis 35 mm, liegen.

Die Mehrschichtfolie kann außer den genannten Folien bzw. Schichten weitere an sich bekannte Schichten aufweisen, z.B. Barriereschichten, Blockerschichten, Antireflexions- oder Reflexionsschichten und/oder Glättungsschichten.

Die Erfindung betrifft ferner ein Verfahren zur Herstellung einer Verbundscheibe mit elektrisch steuerbaren optischen Eigenschaften, umfassend
a) Bereitstellen eines erfindungsgemäßen Funktionselements mit elektrisch steuerbaren optischen Eigenschaften wie vorstehend beschrieben,
b) Bilden einer Anordnung von einer Außenscheibe, dem Funktionselement und einer Innenscheibe in dieser Reihenfolge,
c) Verbinden der Außenscheibe und der Innenscheibe durch Lamination, wobei zumindest zeitweise ein Unterdruck bzw. Vakuum an die Anordnung angelegt wird,
wobei durch die erste und zweite Schutzfolie des Funktionselements Verbindungsschichten gebildet werden und, sofern das Funktionselement die eine oder mehreren Versiegelungsfolien umfasst, durch die eine oder mehreren Versiegelungsfolien entlang zumindest eines Bereichs der umlaufenden Seitenkante des Funktionselements eine Versiegelung gebildet wird.

Im Sinne vorliegender Erfindung wird unter einer Versiegelung die Versiegelung der Seitenkante im Bereich der aktiven Schicht des Funktionselements oder im Bereich der aktiven Schicht, der Flächenelektroden und der Trägerfolien des Funktionselements, d.h. eine Versiegelung der Seitenkante des Funktionselements ohne Schutzfolien, verstanden. Die Versiegelung bezieht sich nicht auf eine Versiegelung der Seitenkante im Bereich der Schutzfolien des Funktionselements, sondern soll unter anderem gerade eine Versiegelung des Funktionselements gegenüber den Materialien der Schutzfolie bewirken. Die Schutzfolien sind bei eingebautem Funktionselement nicht mehr Teil des Funktionselements, sondern bilden jeweils eine Verbindungsschicht zur Bildung des Verbunds.

Eine Innenscheibe und eine Außenscheibe sind Bestandteil der herzustellenden Verbundscheibe. Mit Innenscheibe wird die dem Innenraum zugewandte Scheibe bezeichnet. Mit Außenscheibe wird die der äußeren Umgebung zugewandte Scheibe bezeichnet. Die Innenscheibe und die Außenscheibe können flache oder gebogene Scheiben sein. Die Innenscheibe und die Außenscheibe können aus dem gleichen Material oder aus verschiedenem Material sein.

Die Scheiben können aus anorganischem Glas und/oder organischem Glas (Kunststoff) sein. Die Innenscheibe und die Außenscheibe können z.B. unabhängig voneinander aus Flachglas, Quarzglas, Borosilikatglas, Kalk-Natron-Glas, Aluminosilikatglas, Polycarbonat und/oder Polymethacrylat sein. Die Innenscheibe und die Außenscheibe sind bevorzugt aus Kalk-Natron-Glas. Die Innenscheibe und die Außenscheibe können unabhängig voneinander klar oder getönt sein.

Die Innenscheibe und die Außenscheibe können die gleiche Dicke oder unterschiedliche Dicken aufweisen. Bevorzugt weisen die Innenscheibe und die Außenscheibe unabhängig voneinander eine Dicke im Bereich von 0,4 bis 5,0 mm, z.B. 1 bis 3 mm, stärker bevorzugt 1,6 bis 2,5 mm, auf.

Die Innenscheibe und/oder die Außenscheibe können weitere geeignete, an sich bekannte Beschichtungen aufweisen, z.B. Antihaftbeschichtungen, tönende Beschichtungen, Antireflexbeschichtungen, Antikratzbeschichtungen oder Low-E-Beschichtungen. Ein Beispiel für beschichtetes Glas ist Low-E-Glas (Low-Emissivity-Glas).

Gemäß Verfahrensschritt a) des erfindungsgemäßen Verfahrens wird ein erfindungsgemäßes (unverbautes) Funktionselement mit elektrisch steuerbaren optischen Eigenschaften bereitgestellt. Das Bereitstellen des Funktionselements in Verfahrensschritt a) kann das Ausschneiden des Funktionselements aus einer größeren Mehrschichtfolie des Funktionselements in der Größe und Form, in der es in die Verbundscheibe einlaminiert werden soll, umfassen. Das Ausschneiden kann z.B. mechanisch, z.B. mit einem Messer, oder mittels eines Lasers erfolgen.

In einer bevorzugten Ausführungsform des Verfahrens wird ein erfindungsgemäßes (unverbautes) Funktionselement bereitgestellt, das die eine oder mehreren Versiegelungsfolien umfasst, die an der Mehrschichtfolie angebracht sind.

In diesem Fall kann das Bereitstellen des (unverbauten) Funktionselements auch das Anbringen der einen oder mehreren Versiegelungsfolien entlang eines Randbereichs der Mehrschichtfolie umfassen. Dies erfolgt für jede als Versiegelungsfolie eingesetzte PET-Folie oder Polyimid-Folie vorzugsweise durch Ablösen der ersten oder zweiten Schutzfolie in dem Randbereich des Funktionselements von der ersten bzw. zweiten Trägerfolie, Zurückfalten der abgelösten Schutzfolie, Einlegen eines Teils der Versiegelungsfolie auf die freigelegte Trägerfolie und Auflegen der zurückgefalteten Schutzfolie auf den eingelegten Teil der Versiegelungsfolie. Auf diese Weise ist ein Teil der Versiegelungsfolie entlang eines Randbereichs zwischen erster Schutzfolie und erster Trägerfolie oder zweiter Schutzfolie und zweiter Trägerfolie positioniert bzw. fixiert, während der andere Teil aus der Mehrschichtfolie herausragt.

In Verfahrensschritt b) wird eine Anordnung von der Außenscheibe, dem Funktionselement und der Innenscheibe in dieser Reihenfolge gebildet. Beim Anordnen des Schichtstapels wird das Funktionselement bevorzugt so positioniert, dass es sich nicht bis zu einer der Seitenkanten des Schichtstapels erstreckt.

In Verfahrensschritt c) werden die Außenscheibe und die Innenscheibe durch Lamination verbunden, wobei zumindest zeitweise ein Unterdruck oder Vakuum an die Anordnung angelegt wird. Bei der Laminierung werden zumindest durch die erste und zweite Schutzfolie des Funktionselements Verbindungsschichten gebildet, die einen Verbund zwischen Außenscheibe und Innenscheibe bewirken. Die Schutzfolien sind somit gleichzeitig Verbindungsschichten.

Die Laminierung umfasst in der Regel eine Entlüftung oder Evakuierung unter Bildung eines Vorverbunds und die finale Lamination des Vorverbunds unter Bildung der Verbundscheibe. Das zumindest zeitweise Anlegen eines Unterdrucks oder Vakuums an die Anordnung kann während der Entlüftung und/oder während der finalen Lamination erfolgen, vorzugsweise bei der Entlüftung bzw. Evakuierung. Die Stärke des Unterdrucks ist beliebig. Je nach Anlage können z.B. die bei der Entlüftung eingesetzten Unterdrücke unterschiedlich sein. Alle bei üblichen Entlüftungsverfahren eingesetzten Unterdrücke sind geeignet. Beispielhaft kann bei einem Druck von -0,8 bar gearbeitet werden, höhere oder niedrigere Unterdrücke sind aber genauso geeignet.

Die Entlüftung kann nach den bekannten Verfahren erfolgen, z.B. durch eine Kalanderbehandlung oder durch ein Vakuumverfahren, wobei ein Vakuumverfahren bevorzugt ist. Beim Vakuumverfahren wird an die Anordnung, die z.B. in einen Vakuumsack oder in einem Vakuumrahmen platziert wurde, ein Vakuum angelegt und Restluft aus der fixierten Anordnung abgezogen. Bei der Entlüftung erfolgt in der Regel auch eine Erwärmung der Anordnung. Wie erwähnt, weisen die Schutzfolien, insbesondere PVB-Schutzfolien, bevorzugt eine Rauigkeit auf der nach außen weisenden Seite auf, wodurch die Entlüftung vereinfacht wird. Das finale Laminieren erfolgt bevorzugt unter Einwirkung von Wärme und Druck oder Vakuum, um die fertige Verbundscheibe zu erhalten. Es können an sich bekannte Verfahren zur Lamination verwendet werden, beispielsweise Autoklavverfahren, Vakuumsackverfahren, Vakuumringverfahren, Kalanderverfahren, Vakuumlaminatoren oder Kombinationen davon.

Bei der finalen Laminierung erfolgt in der Regel ein Aufschmelzen der Schutzfolien. Die finale Laminierung kann z.B. bei Temperaturen von 80°C bis 150°C, bevorzugt 105°C bis 145°C, und einem Autoklavdruck von etwa 10 bis 14 bar erfolgen.

Sofern das Funktionselement eine oder mehreren Versiegelungsfolien umfasst, wird bei der Lamination der Anordnung durch die eine oder mehreren Versiegelungsfolien entlang zumindest eines Bereichs der Seitenkante des Funktionselements eine Versiegelung gebildet. Der Teil der Versiegelungsfolie, der aus der Mehrschichtfolie herausragt, oder sofern zwei Versiegelungsfolien entlang des Bereichs der Seitenkante angebracht sind, die Teile der beiden Versiegelungsfolien, die aus der Mehrschichtfolie herausragen, überdecken dabei vorzugsweise die aktive Schicht, die Flächenelektroden und die Trägerfolien oder, sofern in diesem Bereich eine Sammelschiene angeordnet ist, die Trägerschicht, an der die Versiegelungsfolie angebracht ist, die dazugehörige Flächenelektrode und die aktive Schicht bis zur Sammelschiene, wodurch die Seitenkante des Funktionselements ohne die Schutzfolien in diesem Bereich versiegelt wird, gegebenenfalls mithilfe der Sammelschiene. Die aufliegende Positionierung der herausragenden Teile der Versiegelungsfolie auf der Seitenkante des Funktionselements wird dabei insbesondere durch das zumindest zeitweise Anlegen eines Unterdrucks bzw. Evakuierens an die Anordnung gestützt. Das Einklemmen der Versiegelungsfolie zwischen Trägerfolie und PVB reicht zunächst zur Positionierung, durch die Evakuierung wird sie dann fixiert, angedrückt und entlüftet.

Die herausragenden Teile der Versiegelungsfolie können sich glatt oder in gefalteter Form an der Seitenkante in Richtung zur aktiven Schicht anlegen, um die Versiegelung zu bilden. Die Faltungen können unregelmäßig sein. Insbesondere bei zwei Versiegelungsfolien in dem Randbereich können sich gefaltete Formen ergeben, wobei die herausragenden Teile der beiden Versiegelungsfolien in Kontakt kommen. In Randbereichen, wo eine Sammelschiene angeordnet ist und eine Versiegelungsfolie eingesetzt wird, liegt der herausragende Teil der Versiegelungsfolie im Allgemeinen so an der Seitenkante an, dass er mit der Sammelschiene in Kontakt kommt und diese teilweise abdeckt. Die Sammelschiene wird so gewissermaßen Teil der Versiegelung. Wie bereits erwähnt, sind mögliche Faltungen bei der Dimensionierung der Versiegelungsfolie, insbesondere der Breite des herausragenden Teils, zu berücksichtigen, um eine Versiegelung in diesem Bereich zu gewährleisten.

Bei der Variante, bei der das Funktionselement die eine oder mehreren Versiegelungsfolien umfasst, wird bei der Laminierung entlang zumindest eines Bereichs der umlaufenden Seitenkante des Funktionselements durch die Versiegelungsfolie(n) eine Versiegelung gebildet. In diesem Bereich weist das Funktionselement ohne Berücksichtigung der Schutzfolie keine offene Seitenkante zur Schutzfolie auf, stattdessen ist die aktive Schicht vom Material der Versiegelungsfolie umgeben. Die aktive Schicht ist dadurch effektiv von dem Material der Schutzfolie und, sofern vorhanden, weiterer Verbindungsschichten isoliert, so dass keine Diffusion zwischen diesem Material und der aktiven Schicht stattfinden kann und eine Degradation der aktiven Schicht verhindert wird. Gegenüber der Versiegelung der Seitenkante durch eine zusätzlich aufgebrachte Komponente, z.B. einem polymeren Band, ist die erfindungsgemäße Lösung konstruktiv einfacher und optisch unauffälliger, so dass die Verbundscheibe ästhetisch ansprechender ist. Auf eine Maskierung der Seitenkante des Funktionselements kann verzichtet werden.

Der erfindungsgemäß versiegelte Bereich der Seitenkante des Funktionselements ohne die Schutzfolien, insbesondere im Bereich der aktiven Schicht, kann die gesamte umlaufende Seitenkante umfassen, gegebenenfalls mit Ausnahme etwaiger Stellen, an denen ein elektrischer Leiter zur elektrischen Kontaktierung der Flächenelektroden über die Seitenkante aus dem Funktionselement herausgeführt wird. Der erfindungsgemäß versiegelte Bereich der Seitenkante des Funktionselements ohne die Schutzfolien, insbesondere im Bereich der aktiven Schicht, kann aber gegebenenfalls auch nur einen Teil der umlaufenden Seitenkante umfassen, z.B. einen Bereich der Seitenkante, der in der Verbundscheibe sichtbar ist und/oder nicht durch andere Maßnahmen verdeckt ist.

Gemäß dem erfindungsgemäßen Verfahren kann eine Verbundscheibe mit dem Funktionselement erhalten werden, wobei die umlaufende Seitenkante des Funktionselements ohne die Schutzfolien, gegebenenfalls zumindest teilweise versiegelt ist. In der Regel ist es aber ferner zweckmäßig den Seitenrand der Verbundscheibe zusätzlich abzudichten, insbesondere wenn das Funktionselement sich nicht bis zu den Seitenkanten der Verbundscheibe erstreckt. Eine solche zusätzliche Abdichtung wird vorzugsweise im Rahmen des erfindungsgemäßen Verfahrens durchgeführt.

In einer bevorzugten Ausführungsform des erfindungsgemäßen Verfahrens umfasst die Bildung der Anordnung daher gemäß Verfahrensschritt b) ferner die Anordnung mindestens einer rahmenartigen thermoplastischen Verbindungsfolie zwischen der Außenscheibe und der Innenscheibe und das Einsetzen des Funktionselements in die Aussparung der mindestens einen rahmenartigen thermoplastischen Verbindungsfolie und/oder die Anordnung mindestens einer thermoplastischen Verbindungsfolie zwischen der Außenscheibe und dem Funktionselement und/oder die Anordnung mindestens einer thermoplastischen Verbindungsfolie zwischen der Innenscheibe und dem Funktionselement.

Bei dieser Ausführungsform wird bei der Lamination aus der ersten Schutzfolie, der zweiten Schutzfolie sowie der mindestens einen rahmenartigen thermoplastischen Verbindungsfolie und/oder der mindestens einen thermoplastischen Verbindungsfolie vorzugsweise eine thermoplastische Zwischenschicht mit eingelagertem Funktionselement gebildet. Das Funktionselement wird so vorteilhaft in eine Zwischenschicht eingelagert, ohne Kontakt zur umgebenden Atmosphäre zu haben.

Die Anordnung mindestens einer rahmenartigen thermoplastischen Verbindungsfolie zwischen der Außenscheibe und der Innenscheibe und das Einsetzen des Funktionselements in die Aussparung der mindestens einen rahmenartigen thermoplastischen Verbindungsfolie ist besonders bevorzugt. Es können eine oder mehrere, z.B. zwei, übereinanderliegende rahmenartige thermoplastische Verbindungsfolien eingesetzt werden. Der Einsatz von mehr als einer rahmenartigen thermoplastischen Verbindungsfolie kann zweckdienlich sein, um die Gesamtdicke der rahmenartigen thermoplastischen Verbindungsfolien an die Dicke des Funktionselements (einschließlich der Schutzfolie) anzugleichen und/oder das Anordnen der Komponenten zu vereinfachen.

Der Einsatz solcher rahmenartigen thermoplastischen Verbindungsfolie ist in der Technik bekannt. Sie weisen die Form eines Bilderrahmens auf. Das Funktionselement wird dabei möglichst passgenau in die Aussparung eingesetzt, so dass es umlaufend von der thermoplastischen Verbindungsfolie umgeben ist. Die mindestens eine rahmenartige thermoplastische Verbindungsfolie gleicht zweckmäßigerweise ungefähr die Dicke des Funktionselements in den Bereichen um das Funktionselement aus, so dass eine mechanisch und optisch verbesserte Verbundscheibe entsteht.

Bei der thermoplastischen Verbindungsfolie, die gegebenenfalls zwischen einer Scheibe und dem Funktionselement angeordnet werden kann, kann es sich um übliche nicht rahmenartige Folien handeln.

Sofern eingesetzt, dient die rahmenartige thermoplastische Verbindungsfolie und/oder die nicht rahmenartige thermoplastische Verbindungsfolie der Verbindung der beiden Scheiben, wie es bei Verbundscheiben üblich ist. Sie dienen somit dem gleichen Zweck wie die Schutzfolien des Funktionselements und bilden vorteilhafterweise zusammen mit den Schutzfolien eine Zwischenschicht, in die das restliche Funktionselement eingebettet ist.

Im Folgenden beziehen sich die Angaben zu thermoplastischen Verbindungsfolien sowohl auf rahmenartige als auch auf nicht rahmenartige thermoplastische Verbindungsfolien, sofern nicht anders angegeben. Für die thermoplastischen Verbindungsfolien können die gleichen Folien verwendet werden, die vorstehend für die Schutzfolien beschrieben wurden, z.B. Polyvinylbutyral (PVB)-Folien, Ethylenvinylacetat (EVA)-Folien oder thermoplastischen Polyurethan (TPU)-Folien, wobei PVB-Folien bevorzugt sind. Es wird auf die vorstehende Beschreibung im Zusammenhang mit den Schutzfolien bezüglich der enthaltenen Komponenten verwiesen.

Es ist bevorzugt, dass die eingesetzten thermoplastischen Verbindungsfolien das gleiche thermoplastische Polymer enthalten, welches auch in den Schutzfolien enthalten ist, insbesondere PVB. Die thermoplastischen Verbindungsfolien können weitere Bestandteile enthalten wie vorstehend beschrieben, insbesondere einen Weichmacher. Die thermoplastische Verbindungsfolie kann weichmacherfrei oder weichmacherhaltig sein, wobei eine Weichmacher enthaltende thermoplastische Verbindungsfolie bevorzugt ist. Beispiele für Weichmacher sind aliphatische Diester von Tri- oder Tetraethylenglykol, z.B. Triethylenglykol-bis-(2-ethylhexanoat). Die thermoplastische Verbindungsfolie ist bevorzugt eine weichmacherhaltige PVB-Folie, z.B. mit einem Weichmacheranteil von mindestens 15 Gew.-%.

Bezüglich der Dicke der thermoplastischen Verbindungsfolie gelten die Angaben, die für die Schutzfolie gegeben wurden, wobei für die mindestens eine rahmenartige thermoplastische Verbindungsfolie zu beachten ist, dass deren Dicke bzw. Gesamtdicke etwa der Dicke des Funktionselements (einschließlich Schutzfolie) entsprechen sollte. Dementsprechend kann die thermoplastische Verbindungsfolie z.B. eine Dicke im Bereich von 0,03 mm bis 0,9 mm, bevorzugt von 0,3 mm bis 0,6 mm, aufweisen, wobei es sich bevorzugt um PVB-Folien handelt.

Es ist bei dem erfindungsgemäßen Verfahren möglich, neben dem Funktionselement eine oder mehrere zusätzliche funktionelle Schichten zwischen der Innenscheibe und Außenscheibe einzubauen. Beispiele sind Akustikfolien, Absorptionsfolien und IRreflektierende Folien bzw. die daraus gebildeten Schichten. IR steht wie üblich als Abkürzung für Infrarot. Sofern weitere funktionelle Schichten in die Verbundscheibe aufgenommen werden sollen, werden die entsprechenden funktionellen Folien bevorzugt zwischen zwei Verbindungsfolien oder zwischen einer Verbindungsfolie und einer Schutzfolie des Funktionselements angeordnet.

Zur elektrischen Kontaktierung werden gewöhnlich elektrische Kabel mit den Flächenelektroden bzw. Sammelschienen des Funktionselements verbunden und über die Seitenkante aus der Anordnung herausgeführt. Ein solcher Anschluss der Kabel erfolgt vor dem Laminieren der Verbundscheibe.

Gezeigt ist auch eine Verbundscheibe mit elektrisch steuerbaren optischen Eigenschaften, umfassend eine Außenscheibe, eine Innenscheibe und ein zwischen der Außenscheibe und der Innenscheibe angeordnetes erfindungsgemäßes Funktionselement mit elektrisch steuerbaren optischen, wobei die erste Schutzfolie und die zweite Schutzfolie des Funktionselements Verbindungsschichten bilden. Die durch die Schutzfolien gebildeten Verbindungsschichten verbinden die Innenscheibe und Außenscheibe, ohne dass zusätzliche thermoplastische Verbindungsschichten erforderlich sind.

Sofern das Funktionselement gemäß der bevorzugten Ausführungsform die eine oder mehreren Versiegelungsfolien umfasst, wird durch die eine oder mehreren Versiegelungsfolien entlang zumindest eines Bereichs der umlaufenden Seitenkante des Funktionselements eine Versiegelung gebildet. Vorzugsweise ist im Wesentlichen die ganze umlaufende Seitenkante des Funktionselements ohne die Schutzfolien, insbesondere im Bereich der aktiven Schicht, durch die Versiegelungsfolien versiegelt.

Wie bereits erwähnt, gelten die vorstehenden Angaben zum erfindungsgemäßen Funktionselement und zum erfindungsgemäßen Verfahren analog für die Verbundscheibe, so dass darauf verwiesen wird.

Die Erfindung betrifft ferner die Verwendung des erfindungsgemäßen Funktionselements mit elektrisch steuerbaren optischen Eigenschaften in einer Verbundscheibe, beispielsweise als Fensterscheibe von Gebäuden, von Räumen im Inneren von Gebäuden oder von Fahrzeugen, insbesondere als Heckscheibe, Seitenscheibe, Windschutzscheibe oder Dachscheibe von Kraftfahrzeugen, wie z.B. Personenkraftfahrzeugen, oder Transportfahrzeugen, wie z.B. Bussen, Zügen und Schiffen.

Die Erfindung wird im Folgenden mithilfe von Ausführungsbeispielen und beigefügten Figuren näher erläutert, welche die Erfindung in keiner Weise einschränken sollen. Die beigefügten Figuren sind schematische Darstellungen und nicht maßstabsgetreu.

Es zeigen:
- Fig. 1: einen Ausschnitt eines erfindungsgemäßen Funktionselements mit elektrisch steuerbaren optischen Eigenschaften im Querschnitt,
- Fig. 2: einen Ausschnitt eines weiteren erfindungsgemäßen Funktionselements mit angebrachten Versiegelungsfolien im Querschnitt,
- Fig. 3: das erfindungsgemäße Funktionselement gemäß Fig. 2 im eingebauten Zustand,
- Fig. 4: einen Ausschnitt einer erfindungsgemäßen Verbundglasscheibe mit Versiegelung im Bereich der Seitenkante des Funktionselements im Querschnitt
- Fig.5: einen Ausschnitt eines erfindungsgemäßen Funktionselements mit angeordneter Sammelschiene im Querschnitt,
- Fig. 6: das Funktionselement gemäß Fig. 5 mit angebrachter Versiegelungsfolie im eingebauten Zustand,
- Fig. 7: eine Draufsicht auf eine Anordnung für eine erfindungsgemäße Verbundscheibe mit angebrachten Versiegelungsfolien,

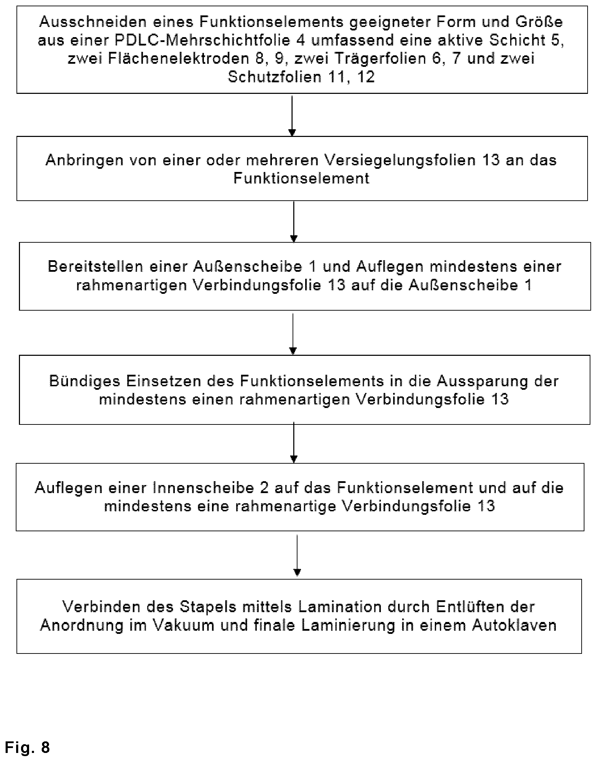

- Fig. 8: ein Ausführungsbeispiel des erfindungsgemäßen Verfahrens anhand eines Flussdiagramms.

Fig. 1 zeigt einen Ausschnitt des erfindungsgemäßen (unverbauten) Funktionselements mit elektrisch steuerbaren optischen Eigenschaften im Querschnitt. Der Ausschnitt zeigt ein Seitenende des Funktionselements. Das Funktionselement ist in Form einer Mehrschichtfolie 4 ausgebildet. Bei dem Funktionselement handelt es sich um ein PDLC-Funktionselement. Die Mehrschichtfolie 4 ist in dieser Reihenfolge aus einer ersten Schutzfolie 11, einer ersten Trägerfolie 6, einer ersten Flächenelektrode 8, einer aktiven Schicht 5, einer zweiten Flächenelektrode 9, einer zweiten Trägerfolie 7 und einer zweiten Schutzfolie 12 gebildet.

Die erste und zweite Schutzfolie 11, 12 sind jeweils PVB-Folien, die eine Dicke von 0,38 mm aufweisen. Bevorzugt handelt es sich um weichmacherfreie PVB-Folien. Die PVB-Folien können unabhängig voneinander klar oder getönt sein. Die erste und zweite Trägerfolie 6, 7 sind PET-Folien und weisen z.B. eine Dicke von etwa 0,18 mm auf. Die aktive Schicht 5 enthält eine Polymermatrix mit darin dispergierten Flüssigkristallen, die sich in Abhängigkeit der an die Flächenelektroden angelegten elektrischen Spannung ausrichten, wodurch die optischen Eigenschaften einstellbar sind. Die Trägerfolien 6, 7 sind mit einer zur aktiven Schicht 5 weisenden elektrisch leitfähigen Beschichtung, z.B. aus ITO mit einer Dicke von etwa 100 nm, versehen, welche die Flächenelektroden 8, 9 ausbilden. Die Dicke der Mehrschichtfolie ohne die beiden Schutzfolien beträgt ungefähr 0,4 mm.

Fig. 2 zeigt das Funktionselement gemäß Fig. 1, bei dem an einem Randbereich der Mehrschichtfolie zwei Versiegelungsfolien 13 angebracht sind. Die Versiegelungsfolien 13 sind PET-Folien, die z.B. eine Dicke von 0,05 mm aufweisen. Ein Teil einer Versiegelungsfolie 13 ist zwischen der ersten Schutzfolie 11 und der ersten Trägerfolie 6 angeordnet. Der andere Teil dieser Versiegelungsfolie 13 ragt aus der Mehrschichtfolie heraus. Die Breite des Teils der Versiegelungsfolie 13 zwischen der ersten Schutzfolie 11 und der ersten Trägerfolie 6 ist in der Figur als "Bl" gekennzeichnet. Die Breite des anderen Teils der Versiegelungsfolie 13, der aus der Mehrschichtfolie herausragt, ist in der Figur als "BA" gekennzeichnet. Entsprechend ist ein Teil der anderen Versiegelungsfolie 13 zwischen der zweiten Schutzfolie 12 und der zweiten Trägerfolie 7 angeordnet. Der andere Teil der Versiegelungsfolie 13 ragt aus der Mehrschichtfolie 4 heraus. Die Breite des Teils der Versiegelungsfolie 13 zwischen Schutzfolie und Trägerfolie (Breite BI) kann z.B. im Bereich von 3 bis 20 mm, bevorzugt 4 bis 15 mm, liegen. Die Breite des aus der Mehrschichtfolie 4 herausragenden Teils (Breite BA) kann z.B. im Bereich von 5 bis 30 mm, bevorzugt 8 bis 20 mm, liegen.

Wie erwähnt sind die Figuren schematisch. In der Fig. 2 sind die Versiegelungsfolien 13 zur besseren Veranschaulichung als völlig selbsttragende Folien dargestellt. Das ist nicht notwendigerweise der Fall, d.h. die herausragenden Teile der Versiegelungsfolien 13 können real zumindest teilweise herunterhängen.

In Fig. 2 ist das Prinzip der Anbringung der Versiegelungsfolien 13 zur besseren Übersicht nur an einer Seite der Mehrschichtfolie 4 gezeigt. In den bevorzugten Ausführungsformen sind an allen Seiten der Mehrschichtfolie 4 ein oder zwei Versiegelungsfolien 13 angebracht.

Fig. 3 zeigt das Funktionselement von Fig. 2, wie es eingebaut in eine Verbundscheibe vorliegt. Die restlichen Bestandteile der Verbundscheibe sind nicht dargestellt. Die beiden herausragenden Teile der beiden Versiegelungsfolien 13 überdecken gemeinsam die Seitenkante der Mehrschichtfolie 4 ohne die Schutzfolien 11, 12 und bilden eine Versiegelung. Die Darstellung der Überdeckung ist rein schematisch. Die Art der Zusammenfaltung der herausragenden Teile der beiden Versiegelungsfolien 13 kann unregelmäßiger sein. Insbesondere sind die beiden in Kontakt stehenden Bereiche der Versiegelungsfolien 13 im Allgemeinen nicht wie dargestellt aufrecht stehend, sondern z.B. in irgendeiner Form umgefaltet auf den die Seitenkante überdeckenden Bereichen der Versiegelungsfolie.

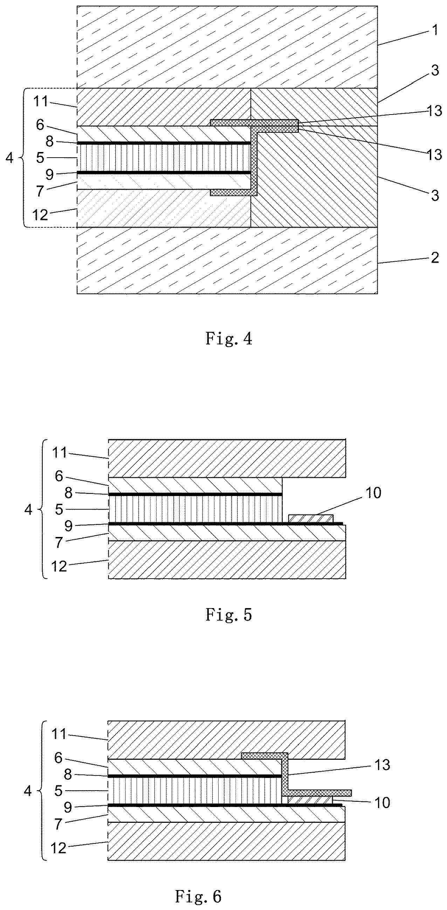

Fig. 4 zeigt einen Ausschnitt einer erfindungsgemäßen Verbundglasscheibe, die z.B. als Dachscheibe geeignet ist, mit Versiegelung der Seitenkante des Funktionselements ohne Schutzfolien im Querschnitt. Der Ausschnitt zeigt ein Seitenende der Verbundscheibe. Die Verbundscheibe umfasst ein eingebautes Funktionselement 4, welches dem in den Fig. 2 und 3 gezeigten Funktionselement entspricht. Für die Beschreibung der Komponenten des Funktionselements wird auf diese Figuren verwiesen.

Die Verbundscheibe umfasst eine Außenscheibe 1 und eine Innenscheibe 2. Die Außenscheibe 1 und die Innenscheibe 2 sind aus Kalk-Natron-Glas. Die Außenscheibe 1 und die Innenscheibe 2 weisen jeweils eine Dicke von 2,1 mm auf. In einer anderen möglichen Ausführungsform kann die Außenscheibe 1 z.B. eine Dicke von 2,1 mm und die Innenscheibe 2 z.B. eine Dicke von 1,6 mm aufweisen. Die Mehrschichtfolie 4 des Funktionselements ist in zwei übereinandergestapelte rahmenartige Verbindungsfolien 3 eingesetzt. Von den beiden rahmenartigen Verbindungsfolien 3 ist in dem gezeigten Ausschnitt im Querschnitt nur der Teil an dem Seitenende der Verbundscheibe sichtbar. Die gezeigte Anordnung auf der nicht gezeigten gegenüberliegenden Seite der Verbundscheibe ist spiegelbildlich ausgebildet. Die beiden rahmenartigen Verbindungsfolien 3 weisen einen Ausschnitt auf, in welchen die PDLC-Mehrschichtfolie 4 im Wesentlichen passgenau eingelegt werden kann. Die beiden rahmenartigen Verbindungsfolien 3 bildet also gleichsam eine Art Passepartout für das Funktionselement.

Beide rahmenartigen Verbindungsfolien 3 sind PVB-Folien, die einen Weichmacher enthalten. Die eine rahmenartige Verbindungsfolie 3 weist eine Dicke von 0,76 mm auf. Die andere rahmenartige Verbindungsfolie 3 weist eine Dicke von 0,38 mm auf. Die Gesamtdicke der beiden rahmenartigen Verbindungsfolien 3 entspricht dabei ungefähr der Dicke des Funktionselements 4 einschließlich Schutzfolien 11, 12. Nach Laminierung bilden die beiden rahmenartigen Verbindungsfolien 3 und die Schutzfolien 11, 12 des Funktionselements zusammen eine thermoplastische Zwischenschicht, in die das Funktionselement eingelagert ist. Die gebildete thermoplastische Zwischenschicht verbindet außerdem die Außenscheibe 1 mit der Innenscheibe 2.

Die beiden an der Mehrschichtfolie 4 angebrachten Versiegelungsfolien 13 überdecken mit ihren herausragenden Teilen die Seitenkante des Funktionselements 4 ohne Schutzfolie 11, 12, wodurch eine Versiegelung gebildet wird. Fig. 4 zeigt gegenüber Fig. 3 eine andere denkbare Faltungsart der herausragenden Teile der Versiegelungsfolie. Auch diese ist schematisch, gewöhnlich ergibt sich eine unregelmäßigere Faltung.

Ein Rand von 4 mm ist zweckmäßig, um eine sichere Versiegelung zu erreichen, was durch das erfindungsgemäße Funktionselement bzw. das erfindungsgemäße Verfahren gut gelingt, insbesondere, wenn zwei PET-Folien an der Seite der Mehrschichtfolie als Versiegelungsfolie angebracht sind.

Nach dem Laminieren werden keine Lufteinschlüsse beobachtet. Das Material im Randbereich bei der Randversiegelung kann sich aufwellen, durch die Entlüftung waren aber auch nach einer beschleunigten Alterung (30 Tage bei 90°C) keine optischen Defekte erkennbar.

Für laminierte Scheiben ist ein sogenannter Bake-Test üblich, bei dem die laminierte Scheibe für 2h bei 120°C ausgelagert wird. Bei minderwertigen Scheiben sind Luftblasen zu erkennen. Auch dieser Test wurde von den erfindungsgemäßen Verbundscheiben mit der entsprechenden Versiegelung bestanden.

Fig. 5 zeigt einen Ausschnitt eines erfindungsgemäßen Funktionselements im Querschnitt, an dem eine Sammelschiene angeordnet ist. Der Ausschnitt zeigt ein Seitenende der Mehrschichtfolie 4. Abgesehen von der Anordnung der Sammelschiene 10 entspricht das Funktionselement dem in Fig. 1 gezeigten Funktionselement. Für die Beschreibung der Komponenten des Funktionselements wird auf Fig. 1 verwiesen.

Entlang des Randbereichs der gezeigten Seite der Mehrschichtfolie 4 sind die erste Trägerfolie 6, die Flächenelektrode 8 und die aktive Schicht 5 ausgespart, so dass die zweite Schutzfolie 12, die zweite Trägerfolie 7 und die Flächenelektrode 9 überstehen. Auf der überstehenden Flächenelektrode 9 ist eine Sammelschiene 10 angeordnet, die z.B. aus einem Kupferband oder einem silberhaltigen Druck gebildet sein kann.

An der Mehrschichtfolie ist im Allgemeinen zumindest eine weitere Sammelschiene angeordnet, was in Fig. 5 nicht gezeigt ist. Hierfür sind entlang eines anderen Randbereichs der Mehrschichtfolie die zweite Trägerfolie, die zwischen der zweiten Trägerfolie und der aktiven Schicht befindliche Flächenelektrode und die aktive Schicht ausgespart, so dass die erste Schutzfolie, die erste Trägerfolie, und die zwischen der ersten Trägerfolie und der aktiven Schicht befindliche Flächenelektrode überstehen. Auf der überstehenden Flächenelektrode ist die weitere Sammelschiene angeordnet.

Fig. 6 zeigt das Funktionselement gemäß Fig. 5, an das eine Versiegelungsfolie 13 angebracht ist. Entlang des Randbereichs der Seite ist ein Teil der Versiegelungsfolie 13 zwischen der ersten Schutzfolie 11 und der erste Trägerfolie 6 angeordnet. Der andere Teil der Versiegelungsfolie 13 ragt aus der Mehrschichtfolie 4 heraus. Fig. 6 zeigt eine mögliche Positionierung des herausragenden Teils der Versiegelungsfolie 13 im verbauten Zustand, die restlichen Komponenten der Verbundscheibe sind aus Gründen der Übersichtlichkeit nicht dargestellt. Die Seitenkante der aktiven Schicht 5 wird von der Versiegelungsfolie 13 in Kombination mit der mit der Versiegelungsfolie in Kontakt stehenden Sammelschiene 10 überdeckt, wodurch eine Versiegelung gebildet wird. Die Sammelschiene 10 ist über nicht dargestellte Verbindungskabel mit der Bordelektrik verbindbar.

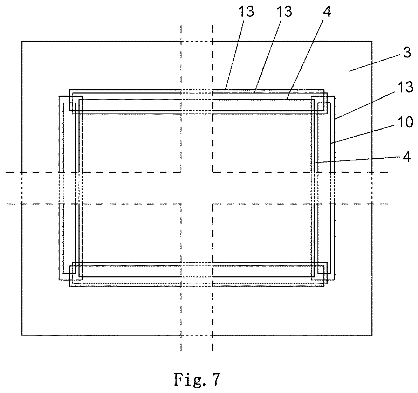

Fig. 7 zeigt eine Draufsicht auf eine Anordnung für eine Verbundscheibe mit angebrachten Versiegelungsfolien für ein Schiebdach eines Fahrzeugs, wobei die Innen- und Außenscheibe zur Verdeutlichung weggelassen sind. Die Darstellung zeigt Auschnitte der Anordnung an den vier Seitenecken. Die Anordnung gemäß Fig. 7 zeigt die Anordnung vor der Laminierung.

Die in Fig. 7 von oben gezeigte rahmenartige Verbindungsfolie 3 entspricht den beiden, übereinander angeordneten rahmenartigen Verbindungsfolien (zwei PVB-Folien mit Dicken von 0,76 mm bzw. 0,38 mm), die in Fig. 4 ausschnittsweise im Querschnitt gezeigt ist. Eine PDLC-Mehrschichtfolie 4 entsprechend Fig. 1 ist in die Aussparung der rahmenartigen Verbindungsfolie 3 eingesetzt.

An der rechten und linken Seite der Mehrschichtfolie 4 ist jeweils eine Sammelschiene 10 angeordnet, wie für Fig. 5 beschrieben. An der rechten und linken Seite der Mehrschichtfolie 4 ist außerdem jeweils eine Versiegelungsfolie 13 (PET-Folie, 0,05 mm dick) in der beschriebenen Weise (z.B. Fig. 6) an der Mehrschichtfolie 4 angebracht. An der oberen und unteren Seite der Mehrschichtfolie 4 befinden sich außerdem jeweils zwei Versiegelungsfolien 13 (PET-Folie, 0,05 mm dick), die in der beschriebenen Weise (z.B. Fig. 2) an der Mehrschichtfolie 4 angebracht sind.

Die Länge der Versiegelungsfolien 13 ist dabei jeweils größer als die Länge der Seite der Mehrschichtfolie 4, an der sie angebracht sind, so dass die Versiegelungsfolien 13 die beiden Enden der jeweiligen Seite etwas überlappen. Nach erfolgter Laminierung wird bei dieser Ausgestaltung im Wesentlichen die ganze umlaufende Seitenkante der Mehrschichtfolie 4 ohne Schutzfolie durch die Versiegelungsfolien 13 versiegelt. Die Versiegelung kann gegebenenfalls für erforderliche elektrische Anschlüsse unterbrochen sein (nicht gezeigt). Eine optisch unauffällige Versiegelung kann so in einfacher Weise erhalten werden.

### Bezugszeichenliste

- 1: Außenscheibe
- 2: Innenscheibe
- 3: rahmenartige thermoplastische Verbindungsfolie bzw. Verbindungsschicht
- 4: Mehrschichtfolie bzw. Funktionselement mit elektrisch regelbaren optischen Eigenschaften
- 5: aktive Schicht
- 6: erste Trägerfolie
- 7: zweite Trägerfolie
- 8: erste Flächenelektrode
- 9: zweite Flächenelektrode
- 10: Sammelschiene
- 11: erste Schutzfolie
- 12: zweite Schutzfolie
- 13: Versiegelung bzw. Versiegelungsfolie
- BI: Breite des Teils der Versiegelungsfolie, der zwischen Schutzfolie und Trägerfolie angeordnet ist
- BA: Breite des Teils der Versiegelungsfolie, der aus der Mehrschichtfolie (4) herausragt

## Patentansprüche

1. Vorgefertigtes Funktionselement mit elektrisch steuerbaren optischen Eigenschaften, welches noch nicht in einer Verbundscheibe verbaut ist, umfassend eine Mehrschichtfolie (4), die in dieser Reihenfolge eine erste Schutzfolie (11), eine erste Trägerfolie (6), eine erste Flächenelektrode (8), eine aktive Schicht (5), eine zweite Flächenelektrode (9), eine zweite Trägerfolie (7) und eine zweite Schutzfolie (12) umfasst, wobei
die erste Schutzfolie (11) und die zweite Schutzfolie (12) jeweils unabhängig ausgewählt sind aus einer Polyvinylbutyral (PVB)-Folie, einer Ethylenvinylacetat (EVA)-Folie oder einer thermoplastischen Polyurethan (TPU)-Folie.

2. Vorgefertigtes Funktionselement nach Anspruch 1, ferner umfassend eine oder mehrere Versiegelungsfolien (13), die jeweils unabhängig ausgewählt sind aus einer Polyethylenterephthalat (PET)-Folie oder einer Polyimid-Folie, wobei jede Versiegelungsfolie (13) an der Mehrschichtfolie (4) angebracht ist, wobei ein Teil der Versiegelungsfolie (13) entlang eines Randbereichs der Mehrschichtfolie (4) zwischen der ersten Schutzfolie (11) und der ersten Trägerfolie (6) oder zwischen der zweiten Schutzfolie (12) und der zweiten Trägerfolie (7) angeordnet ist und der andere Teil der Versiegelungsfolie (13) aus der Mehrschichtfolie (4) herausragt.

3. Vorgefertigtes Funktionselement nach Anspruch 2, wobei an einer oder mehreren Seiten der Mehrschichtfolie (4) jeweils zwei Versiegelungsfolien (13) angebracht sind, wobei entlang eines Randbereichs der jeweiligen Seite ein Teil der einen Versiegelungsfolie (13) zwischen der ersten Schutzfolie (11) und der ersten Trägerfolie (6) angeordnet ist und der andere Teil der Versiegelungsfolie (13) aus der Mehrschichtfolie (4) herausragt und ein Teil der anderen Versiegelungsfolie (13) zwischen der zweiten Schutzfolie (12) und der zweiten Trägerfolie (7) angeordnet ist und der andere Teil der Versiegelungsfolie (13) aus der Mehrschichtfolie (4) herausragt.

4. Vorgefertigtes Funktionselement nach einem der Ansprüche 1 bis 3, ferner umfassend mindestens zwei Sammelschienen (10), die entlang eines ersten Randbereichs und eines zweiten Randbereichs der Mehrschichtfolie (4) angeordnet sind.

5. Vorgefertigtes Funktionselement nach Anspruch 4, wobei an jeder Seite der Mehrschichtfolie (4) jeweils eine oder zwei Versiegelungsfolien (13) angebracht sind, wobei an der oder den Seiten der Mehrschichtfolie (4), wo keine Sammelschiene angeordnet ist, zwei Versiegelungsfolien (13) angebracht sind und an der oder den Seiten der Mehrschichtfolie (4), wo eine Sammelschiene angeordnet ist, eine Versiegelungsfolie (13) angebracht ist.

6. Vorgefertigtes Funktionselement nach einem der Ansprüche 1 bis 5, wobei das Funktionselement ein PDLC-Funktionselement, ein PNLC-Funktionselement oder ein SPD-Funktionselement ist.

7. Vorgefertigtes Funktionselement nach einem der Ansprüche 1 bis 6, wobei die erste Schutzfolie (11) und/oder die zweite Schutzfolie (12) eine PVB-Folie ist, die frei von Weichmacher ist, und/oder
die erste Trägerfolie (6) und die zweite Trägerfolie (7) jeweils eine Polyethylenterephthalat (PET)-Folie ist.

8. Vorgefertigtes Funktionselement nach einem der Ansprüche 1 bis 7, wobei die erste Schutzfolie (11) und/oder die zweite Schutzfolie (12) jeweils unabhängig ausgewählt sind aus einer klaren Folie, einer getönten Folie und einer Akustikfolie.

9. Vorgefertigtes Funktionselement nach einem der Ansprüche 1 bis 8, wobei
die erste und zweite Schutzfolie (11, 12) jeweils unabhängig eine Dicke im Bereich von 0,03 mm bis 0,9 mm aufweisen und/oder
die erste und zweite Trägerfolie (6, 7) jeweils unabhängig eine Dicke im Bereich von 0,03 mm bis 0,4 mm, stärker bevorzugt im Bereich von 0,04 mm bis 0,2 mm, aufweisen und/oder
die eine oder mehreren Versiegelungsfolien (13) jeweils unabhängig eine Dicke im Bereich 0,02 mm bis 0,2 mm, bevorzugt 0,04 mm bis 0,15 mm, aufweisen.

10. Vorgefertigtes Funktionselement nach einem der Ansprüche 2 bis 7, wobei die einen oder mehreren Versiegelungsfolien (13) jeweils so an der Mehrschichtfolie (4) angebracht sind, dass der Teil der Versiegelungsfolie (13), der zwischen der Schutzfolie und der Trägerfolie angeordnet ist, eine Breite im Bereich von 3 bis 20 mm, bevorzugt 4 bis 15 mm, aufweist und/oder der Teil der Versiegelungsfolie (13), der aus der Mehrschichtfolie (4) herausragt, eine Breite im Bereich von 5 bis 30 mm, bevorzugt 8 bis 20 mm, aufweist.

11. Verfahren zur Herstellung einer Verbundscheibe mit elektrisch steuerbaren optischen Eigenschaften, umfassend
a) Bereitstellen eines vorgefertigten Funktionselements mit elektrisch steuerbaren optischen Eigenschaften nach einem der Ansprüche 1 bis 10,
b) Bilden einer Anordnung von einer Außenscheibe (1), dem Funktionselement (4) und einer Innenscheibe (2) in dieser Reihenfolge,
c) Verbinden der Außenscheibe (1) und der Innenscheibe (2) durch Lamination, wobei zumindest zeitweise ein Unterdruck an die Anordnung angelegt wird, wobei die Außenscheibe (1) und die Innenscheibe (2) durch die erste und zweite Schutzfolie (11, 12) des Funktionselements verbunden werden und, sofern das Funktionselement eine oder mehreren Versiegelungsfolien (13) umfasst, durch die eine oder mehreren Versiegelungsfolien (13) entlang zumindest eines Bereichs der umlaufenden Seitenkante des Funktionselements eine Versiegelung (13) gebildet wird.

12. Verfahren nach Anspruch 11, wobei bei der Bildung der Anordnung gemäß Schritt b) mindestens eine rahmenartige thermoplastische Verbindungsfolie (3) zwischen der Außenscheibe (1) und der Innenscheibe (2) angeordnet wird und das Funktionselement (4) in die Aussparung der mindestens einen, rahmenartigen thermoplastischen Verbindungsfolie (3) eingesetzt wird und/oder
zwischen der Außenscheibe (1) und dem Funktionselement (4) mindestens eine thermoplastische Verbindungsfolie angeordnet wird und/oder zwischen der Innenscheibe (2) und dem Funktionselement (4) mindestens eine thermoplastische Verbindungsfolie angeordnet wird, wobei bei der Lamination aus der ersten Schutzfolie (11), der zweiten Schutzfolie (12) sowie der mindestens einen, rahmenartigen thermoplastischen Verbindungsfolie (3) und/oder der mindestens einen thermoplastischen Verbindungsfolie vorzugsweise eine Zwischenschicht mit eingelagertem Funktionselement (4) gebildet wird.

13. Verwendung eines Funktionselements mit elektrisch steuerbaren optischen Eigenschaften nach einem der Ansprüche 1 bis 10 in einer Verbundscheibe, beispielsweise als Fensterscheibe von Gebäuden, von Räumen im Inneren von Gebäuden oder von Fahrzeugen, insbesondere als Heckscheibe, Seitenscheibe, Windschutzscheibe oder Dachscheibe von Kraftfahrzeugen, wie z.B. Personenkraftfahrzeugen, oder Transportfahrzeugen, wie z.B. Bussen, Zügen oder Schiffen.

## Claims

1. Prefabricated functional element with electrically controllable optical properties, which is not yet installed in a composite pane, comprising a multilayer film (4) which comprises, in this order, a first protective film (11), a first carrier film (6), a first surface electrode (8), an active layer (5), a second surface electrode (9), a second carrier film (7) and a second protective film (12), wherein
the first protective film (11) and the second protective film (12) are each independently selected from a polyvinyl butyral (PVB) film, an ethylene vinyl acetate (EVA) film or a thermoplastic polyurethane (TPU) film.

2. Prefabricated functional element according to claim 1, further comprising one or more sealing films (13), each independently selected from a polyethylene terephthalate (PET) film or a polyimide film, wherein each sealing film (13) is attached to the multilayer film (4), wherein a portion of the sealing film (13) is disposed along an edge region of the multilayer film (4) between the first protective film (11) and the first carrier film (6) or between the second protective film (12) and the second carrier film (7) and the other portion of the sealing film (13) protrudes from the multilayer film (4).

3. Prefabricated functional element according to claim 2, wherein two sealing films (13) are attached to one or more sides of the multilayer film (4) in each case, wherein along an edge region of the respective side a part of one sealing film (13) is arranged between the first protective film (11) and the first carrier film (6) and the other part of the sealing film (13) protrudes out of the multilayer film (4) and a part of the other sealing film (13) is arranged between the second protective film (12) and the second carrier film (7) and the other part of the sealing film (13) protrudes out of the multilayer film (4).

4. Prefabricated functional element according to any one of claims 1 to 3, further comprising at least two busbars (10) arranged along a first edge region and a second edge region of the multilayer film (4).

5. Prefabricated functional element according to claim 4, wherein one or two sealing foils (13) are attached to each side of the multilayer film (4), wherein two sealing foils (13) are attached to the side or sides of the multilayer film (4) where no busbar is arranged and one sealing foil (13) is attached to the side or sides of the multilayer film (4) where a busbar is arranged.

6. Prefabricated functional element according to any one of claims 1 to 5, wherein the functional element is a PDLC functional element, a PNLC functional element or an SPD functional element.

7. Prefabricated functional element according to any one of claims 1 to 6, wherein the first protective film (11) and/or the second protective film (12) is a PVB film that is free of plasticizer, and/or
the first carrier film (6) and the second carrier film (7) are each a polyethylene terephthalate (PET) film.

8. Prefabricated functional element according to any one of claims 1 to 7, wherein the first protective film (11) and/or the second protective film (12) are each independently selected from a clear film, a tinted film, and an acoustic film.

9. Prefabricated functional element according to any one of claims 1 to 8, wherein the first and second protective films (11, 12) each independently have a thickness in the range from 0.03 mm to 0.9 mm and/or
the first and second carrier films (6, 7) each independently have a thickness in the range from 0.03 mm to 0.4 mm, more preferably in the range from 0.04 mm to 0.2 mm, and/or
the one or more sealing films (13) each independently have a thickness in the range of 0.02 mm to 0.2 mm, preferably 0.04 mm to 0.15 mm.

10. Prefabricated functional element according to any one of claims 2 to 7, wherein the one or more sealing films (13) are each attached to the multilayer film (4) in such a way that the part of the sealing film (13) which is arranged between the protective film and the carrier film has a width in the range from 3 to 20 mm, preferably 4 to 15 mm, and/or the part of the sealing film (13) which protrudes from the multilayer film (4) has a width in the range from 5 to 30 mm, preferably 8 to 20 mm.

11. Method for producing a composite pane with electrically controllable optical properties, comprising
a) providing a prefabricated functional element with electrically controllable optical properties according to any one of claims 1 to 10,
b) forming an arrangement of an outer pane (1), the functional element (4) and an inner pane (2) in this order,
c) joining the outer pane (1) and the inner pane (2) by lamination, wherein a negative pressure is applied at least temporarily to the arrangement, wherein the outer pane (1) and the inner pane (2) are joined by the first and second protective films (11, 12) of the functional element and, if the functional element comprises one or more sealing films (13), a seal (13) is formed by the one or more sealing films (13) along at least a region of the circumferential side edge of the functional element.

12. Method according to claim 11, wherein, when forming the arrangement according to step b), at least one frame-like thermoplastic connecting film (3) is arranged between the outer pane (1) and the inner pane (2) and the functional element (4) is inserted into the recess of the at least one frame-like thermoplastic connecting film (3) and/or
at least one thermoplastic connecting film is arranged between the outer pane (1) and the functional element (4) and/or at least one thermoplastic connecting film is arranged between the inner pane (2) and the functional element (4), wherein an intermediate layer with embedded functional element (4) is preferably formed during lamination from the first protective film (11), the second protective film (12) and the at least one frame-like thermoplastic connecting film (3) and/or the at least one thermoplastic connecting film.

13. Use of a functional element with electrically controllable optical properties according to any one of claims 1 to 10 in a composite pane, for example as a window pane of buildings, of rooms inside buildings or of vehicles, in particular as a rear pane, side pane, windscreen or roof pane of motor vehicles, such as passenger cars, or transport vehicles, such as buses, trains or ships.

## Revendications

1. Élément fonctionnel préfabriqué aux propriétés optiques contrôlables électriquement, qui n'est pas encore installé dans une vitre composite, comprenant un film multicouche (4) qui comprend, dans l'ordre, un premier film de protection (11), un premier film support (6), une première électrode de surface (8), une couche active (5), une deuxième électrode de surface (9), un deuxième film support (7) et un deuxième film de protection (12), dans lequel
le premier film de protection (11) et le second film de protection (12) sont chacun choisis indépendamment parmi un film de butyral de polyvinyle (PVB), un film d'éthylène-acétate de vinyle (EVA) ou un film de polyuréthane thermoplastique (TPU).

2. Élément fonctionnel préfabriqué selon la revendication 1, comprenant en outre un ou plusieurs films de scellement (13), chacun choisi indépendamment parmi un film de polyéthylène téréphtalate (PET) ou un film de polyimide, dans lequel chaque film de scellement (13) est fixé au film multicouche (4), une partie du film de scellement (13) est disposée le long d'une zone de bord du film multicouche (4) entre le premier film de protection (11) et le premier film de support (6) ou entre le deuxième film de protection (12) et le deuxième film de support (7) et l'autre partie du film de scellement (13) fait saillie par rapport au film multicouche (4).

3. Élément fonctionnel préfabriqué selon la revendication 2, dans lequel deux films de scellement (13) sont attachés à un ou plusieurs côtés du film multicouche (4) dans chaque cas, dans lequel, le long d'une zone de bord du côté respectif, une partie d'un film de scellement (13) est disposée entre le premier film de protection (11) et le premier film de support (6) et l'autre partie du film de scellement (13) dépasse du film multicouche (4) et une partie de l'autre film de scellement (13) est disposée entre le deuxième film de protection (12) et le deuxième film de support (7) et l'autre partie du film de scellement (13) dépasse du film multicouche (4).

4. Élément fonctionnel préfabriqué selon l'une quelconque des revendications 1 à 3, comprenant en outre au moins deux barres omnibus (10) disposées le long d'une première zone de bord et d'une deuxième zone de bord du film multicouche (4).

5. Élément fonctionnel préfabriqué selon la revendication 4, dans lequel une ou deux feuilles d'étanchéité (13) sont fixées à chaque côté du film multicouche (4), deux feuilles d'étanchéité (13) étant fixées au côté ou aux côtés du film multicouche (4) où aucune barre omnibus n'est disposée et une feuille d'étanchéité (13) étant fixée au côté ou aux côtés du film multicouche (4) où une barre omnibus est disposée.

6. Elément fonctionnel préfabriqué selon l'une des revendications 1 à 5, dans lequel l'élément fonctionnel est un élément fonctionnel PDLC, un élément fonctionnel PNLC ou un élément fonctionnel SPD.

7. Élément fonctionnel préfabriqué selon l'une des revendications 1 à 6, dans lequel le premier film de protection (11) et/ou le second film de protection (12) est un film PVB exempt de plastifiant, et/ou
le premier film support (6) et le second film support (7) sont chacun un film en polyéthylène téréphtalate (PET).

8. Élément fonctionnel préfabriqué selon l'une quelconque des revendications 1 à 7, dans lequel le premier film de protection (11) et/ou le second film de protection (12) sont chacun choisis indépendamment parmi un film transparent, un film teinté et un film acoustique.

9. Élément fonctionnel préfabriqué selon l'une des revendications 1 à 8, dans lequel le premier et le deuxième film de protection (11, 12) ont chacun indépendamment une épaisseur comprise entre 0,03 mm et 0,9 mm et/ou
le premier et le deuxième film support (6, 7) ont chacun indépendamment une épaisseur comprise entre 0,03 mm et 0,4 mm, de préférence entre 0,04 mm et 0,2 mm, et/ou
le ou les films de scellement (13) ont chacun indépendamment une épaisseur comprise entre 0,02 mm et 0,2 mm, de préférence entre 0,04 mm et 0,15 mm.

10. Élément fonctionnel préfabriqué selon l'une des revendications 2 à 7, dans lequel le ou les films de scellement (13) sont chacun fixés au film multicouche (4) de telle sorte que la partie du film de scellement (13) qui est disposée entre le film de protection et le film support a une largeur comprise entre 3 et 20 mm, de préférence entre 4 et 15 mm, et/ou la partie du film de scellement (13) qui dépasse du film multicouche (4) a une largeur comprise entre 5 et 30 mm, de préférence entre 8 et 20 mm.

11. Méthode de production d'une vitre composite aux propriétés optiques contrôlables électriquement, comprenant
a) fournir un élément fonctionnel préfabriqué aux propriétés optiques contrôlables électriquement selon l'une des revendications 1 à 10,
b) former un arrangement d'une vitre extérieure (1), de l'élément fonctionnel (4) et d'une vitre intérieure (2) dans cet ordre,
c) assembler la vitre extérieure (1) et la vitre intérieure (2) par laminage, une pression négative étant appliquée au moins temporairement à l'arrangement, la vitre extérieure (1) et la vitre intérieure (2) étant assemblés par le premier et le deuxième film de protection (11, 12) de l'élément fonctionnel et, si l'élément fonctionnel comprend un ou plusieurs films de scellement (13), un joint (13) est formé par le ou les films de scellement (13) le long d'au moins une région du bord latéral circonférentiel de l'élément fonctionnel.

12. Méthode selon la revendication 11, dans lequel, lors de la formation de l'arrangement selon l'étape b), au moins un film de liaison thermoplastique en forme de cadre (3) est disposé entre la vitre extérieure (1) et la vitre intérieure (2) et l'élément fonctionnel (4) est inséré dans la cavité du au moins un film de liaison thermoplastique en forme de cadre (3) et/ou
au moins un film de liaison thermoplastique est disposé entre la vitre extérieure (1) et l'élément fonctionnel (4) et/ou au moins un film de liaison thermoplastique est disposé entre la vitre intérieure (2) et l'élément fonctionnel (4), une couche intermédiaire avec l'élément fonctionnel intégré (4) étant de préférence formée pendant le laminage à partir du premier film de protection (11), du deuxième film de protection (12) et d'au moins un film de liaison thermoplastique en forme de cadre (3) et/ou d'au moins un film de liaison thermoplastique.

13. Utilisation d'un élément fonctionnel aux propriétés optiques contrôlables électriquement selon l'une des revendications 1 à 10 dans une vitre composite, par exemple comme vitre de bâtiments, de pièces à l'intérieur de bâtiments ou de véhicules, en particulier comme vitre arrière, vitre latérale, pare-brise ou vitre de toit de véhicules à moteur, tels que les voitures particulières, ou de véhicules de transport, tels que les autobus, les trains ou les navires.
